# EUROPÄISCHE PATENTSCHRIFT

(11) **EP 2 946 645 B1**
(45) Veröffentlichungstag und Bekanntmachung des Hinweises auf die Patenterteilung: **20.02.2019**
(21) Anmeldenummer: 15001488.4
(22) Anmeldetag: 18.05.2015
(51) Int. Cl.: A01B 17/00, A01B 35/00, A01B 43/00

(54) **VERFAHREN UND EINRICHTUNG ZUM BEHANDELN VON STEINIGEN ACKERBÖDEN**
METHOD AND DEVICE FOR THE TREATMENT OF STONY PLANTATION FIELDS
PROCÉDÉ ET DISPOSITIF DE TRAITEMENT DE TERRE ARABLE PIERREUSE

(30) Priorität: 22.05.2014 DE 102014007605
(43) Veröffentlichungstag der Anmeldung: 25.11.2015
(73) Patentinhaber: Grimme Landmaschinenfabrik GmbH & Co. KG, 49401 Damme (DE)
(72) Erfinder: Dettmer, Franz-Josef, 49577 Ankum (DE); Heuer, Ralf, 49577 Ankum (DE)
(74) Vertreter: Busse & Busse

(56) Entgegenhaltungen:
- DE-A1- 2 344 625
- DE-C- 270 964
- US-A1- 2010 116 516

## Beschreibung

Die Erfindung betrifft ein Verfahren und eine Einrichtung zum Behandeln von steinigen Ackerböden gemäß dem Oberbegriff des Anspruchs 1 bzw. des Anspruchs 18.

Zur Verbesserung des Ernteertrages, insbesondere beim Anbau von Kartoffeln, wird an steinigen und klutenreichen Standorten der Ackerboden zumindest bereichsweise so separiert, dass Beschädigungen der Kartoffeln durch Steine und Kluten insbesondere in der Erntephase vermieden wird und damit mit höherer Produktivität auch hochwertige Hackfrüchte geerntet werden können. Dazu sind bereits unterschiedliche Verfahren und Einrichtungen zur Durchführung von Separiervorgängen auf Ackerböden bekannt (Prospekt "Produktprogramm", Firma Grimme Landmaschinenfabrik GmbH & Co. KG, GEN.00283 -08/13/5000-, Seite 5 und 6).

Auch bei einer Lösung gemäß GB 2 325 842 (1996 / WO 97/34466) ist eine Einrichtung zum Behandeln von steinigen Ackerböden vorgesehen, bei der das steinige Gemisch im Bereich eines Trenngerätes auf einer in Fahrtrichtung fördernden Separierstrecke verlagert werden kann. Damit wird erreicht, dass die insbesondere groben Partikel - in Fahrtrichtung vorlaufend den feineren Strukturen - unmittelbar auf der Ackersohle hinter der aufgenommenen Bodenschicht abgelegt werden. Dabei erfolgt eine Klassifizierung der Bodenstrukturen und -fraktionen, wobei insbesondere auch die kleineren Partikel über die volle Bearbeitungsbreite der Einrichtung eine untere Schichtung bilden. Über dieser Schichtung wird dann die weitgehend steinfreie obere Nutzschicht als Pflanzzone erzeugt. Ein derartiger schichtweiser Aufbau ist auch bei einer Maschine gemäß DE 270 964 A (1912) vorgesehen. Der als Grabgut aufgenommene Ackerboden wird so sortiert, dass gröbere Stücke auf den Furchenboden und die kleineren Stücke schichtweise flächig darüber abgelegt werden. Dazu werden zwei als Siebe wirkende Förderriemen genutzt, die durch unterschiedliche Länge die gröberen Bodenbestandteile zuerst auf den Boden der Furche ausfördern.

Bei einer landwirtschaftlichen Maschine zur Abtrennung von Bodenteilen gemäß DE 600 14 439 T2 (1999) ist ebenfalls ein System zur Hochförderung des über eine Bearbeitungsbreite als Bodenschicht aufgenommenen Gemisches vorgesehen, wobei am Ende des eine geradlinige Förderstrecke bildenden Trenngerätes die aussortierten Partikel in eine auf jeder Seite der Trennvorrichtung befindlichen Furche abgekippt werden.

Eine lediglich zur Auflockerung des Ackerbodens vorgesehene Maschine ist in DE 23 44 625 A (1973) gezeigt, wobei mit dieser die abgehobene Erde nur fein zerkrümelt wird und danach in diese Erdschicht direkt eingesät werden kann. Ein Sortieren von Steinen o. dgl. festen Bestandteilen ist bei dieser Maschine nicht vorgesehen.

Gemäß EP 1 473 983 B1 (2003) ist eine als Drehkultivator bezeichnete Einrichtung vorgesehen, wobei ausgehend von einer walzenförmig umlaufenden Erdreich-Aufbrecheinrichtung das gelockerte Gemisch auf eine entgegen der Fahrtrichtung geneigt nach oben verlaufende Sortiereinrichtung aufgeschleudert wird. Dabei ist die Sortiereinrichtung mit einem nach oben umlaufenden Siebtrum versehen, so dass von diesem aus jeweilige grobe Partikel unter Schwerkraftwirkung abrollen und sofort wieder in einer erzeugten Furche abgelegt werden. Dabei wird entsprechend der Größe der weiteren Partikel und Fraktionen eine Schichtung der Gemischteile im Bereich hinter der Sortiereinrichtung erreicht, so dass eine oben liegende Pflanzzone steinfrei nutzbar ist.

Bei einem Verfahren und einer Vorrichtung zur mechanischen Abtrennung von Übergrößen aus Böden gemäß DE 10 2006 001 713 B3 (2006) werden jeweilige Siebstangen durch einen zu reinigenden Boden bewegt, so dass eine vorbestimmte Übergröße aufweisende Partikel aussortiert und in einem Transportbehälter gesammelt werden können. Die verbleibenden Gemischteile mit kleineren und feinen Partikeln verbleiben auf dem Ackerboden.

Gemäß DE 10 2006 006 385 A1 (2006) ist eine Maschine zum Aufnehmen und Behandeln von Ackerboden gezeigt, wobei im Bereich vor der Separierstrecke des Trenngerätes eine Auflockerung des Ackerbodens entlang seiner Bearbeitungsbreite vorgesehen ist. Danach wird das Gemisch mittels einer verstellbare Walzenkörper aufweisenden Sortierbaugruppe entgegen der Fahrtrichtung nach oben verlagert und gesiebt. Am Ende dieser Sortierbaugruppe können die groben Partikel mittels eines Querförderers ausgeleitet und/oder gesammelt werden.

Eine Separiervorrichtung gemäß US 2010/0116516 A1 zeigt eine den Boden auflockernde Walze, von der aus das Gemisch zu einer rotierenden Bürste gelangt. Diese wirkt mit einer aus Gitterstangen gebildeten Abdeckung zusammen, so dass die jeweilige Zwischenräume der Stangen-Abdeckung passierenden Teile eine erste Bodenlage bilden. Unter dieser werden die groben Partikel dadurch abgelegt, dass die Gitterstangen bogenförmig nach vorn verlaufen und damit die drehende Bürste die Partikelablage in Drehrichtung bewirkt.

Die Erfindung befasst sich mit dem Problem, ein Verfahren und eine Einrichtung zum Behandeln von steinigen Ackerböden zu schaffen, womit aussortierbare Fraktionen in Form von groben und kleinen Partikel in einer Neuschichtung des aufbereiteten Ackerbodens gezielt platziert werden, für eine dann "steinfreie" Nutzschicht eine weitere Wuchsverbesserung von Pflanzgut erreichbar ist und durch eine definierte Positionierung von separierten Stein-Fraktionen die bei der Bodenbearbeitung verwendeten Bearbeitungswerkzeuge geringeren Belastungen ausgesetzt sind.

Die Erfindung löst diese Aufgabe mit einem Verfahren mit den Merkmalen des Anspruchs 1 und einer Einrichtung mit den Merkmalen des Anspruchs 19. Hinsichtlich weiterer vorteilhafter Ausgestaltungen wird auf die Ansprüche 2 bis 18 bzw. 20 bis 38 verwiesen.

Bei Separierungsverfahren zum Behandeln von steinigen Ackerböden wird ein in Bearbeitungsbreite als Bodenschicht aufgenommenes Gemisch des steinigen Ackerbodens entlang einer ansteigenden Förderstrecke in den Bereich eines mit Abstand über einer Ackerfläche angeordneten Trenngerätes bewegt. Dieses definiert eine Separierstrecke, entlang der das Gemisch weiterbewegt wird. Dabei können mittels einer phasenweisen Umlenkung von Teilen des Gemisches jeweilige unterschiedliche Gemisch-Fraktionen in Form von groben, kleinen und feinen Partikeln nacheinander oder gleichzeitig aussortiert werden. Diese unter Schwerkraftwirkung erfolgende Sortierung erfolgt so, dass dabei in Fahrtrichtung nach vorn zumindest die jeweiligen groben Partikel in eine über die Breite der Ackersohle abgelegte Mischschicht verlagert werden können. Bei dieser Verfahrensführung wird erreicht, dass oberhalb dieser Mischschichtung eine Nutzschicht mit im Wesentlichen nur feinen Partikeln als weitgehend steinfreie Pflanzzone erzeugt wird.

Die erfindungsgemäße Verbesserung dieser Verfahrensführung sieht vor, dass zumindest eine Fraktion der aussortierbaren Partikel in zumindest einer im Wesentlichen linienförmig ausrichtbaren und unterhalb der Nutzschicht verlaufenden Sammelzone abgelegt wird. Damit wird ein Sammelprinzip realisiert, bei dem an definiert nachvollziehbaren Positionen befindliche Sammelzonen nach Art eines "Linienraster" unterhalb der als Pflanzzone dienenden Nutzschicht abgelegt werden. Durch diese definierte Lage von Sammelzonen ergeben sich für eine nachfolgende Bearbeitung des Bodens - insbesondere in einer Pflanzphase, einer nachfolgenden Erntephase und einer Aufbereitungsphasen - jeweils optimale Bedingungen. Dabei kann die Belastung der in den Bearbeitungsphasen vorgesehenen Werkzeuge gering gehalten werden, und gleichzeitig sind für den Pflanzenwuchs bzw. den Erntevorgang optimale Bodenstrukturen bereitgestellt.

Die erfindungsgemäße Verfahrensführung mit den linearen Sammelzonen sieht vor, dass die zumindest eine Sammelzone zumindest bereichsweise unterhalb der Separierstrecke verläuft, wobei diese konzentrierte Zusammenführung durch eine - innerhalb der Bearbeitungsbreite erfolgende - Umlenkung von Teilen des Gemisches entgegen dessen Förderrichtung, nämlich in Fahrtrichtung nach vorn, gebildet wird.

Eine denkbare weitere Ausführung des Sortier- und Sammelprinzips sieht vor, dass zumindest ein abgezweigter Teilstrom von Partikeln des Gemisches durch eine seitlich neben der Bearbeitungsbreite verlaufende Förderstrecke ebenfalls in Fahrtrichtung nach vorn verlagert werden kann und dann unter der Nutzschicht abgelegt wird.

Ein erweitertes Konzept der Sammelzonen-Separierung ist darauf gerichtet, dass insbesondere innerhalb der Bearbeitungsbreite des aufgenommenen Gemisches mehrere der Sammelzonen gebildet werden. Dabei ist vorgesehen, dass während einer in Fahrtrichtung erfolgenden Förderphase des Gemisches mehrere Sammelzonen mit auch unterschiedlicher Verteilung der Partikel platziert werden.

Ausgehend von der an sich bekannten Stein-Separierungstechnik als Bodenvorbereitung ist vorgesehen, dass insbesondere im Bereich eines innerhalb der Bearbeitungsbreite definierten Beetes als die Nutzschicht sämtliche störenden Steine, Fremdkörper o. dgl. Fraktionen aufgenommen werden. Danach werden im Ergebnis der erfindungsgemäß verbesserten Separierphase sämtliche der linienförmigen Sammelzonen in einem später unterhalb der Beet-Nutzzone befindlichen Bereich abgelegt.

Die verfahrenstechnische Steuerung der Partikel-Verteilung sieht vor, dass die Sammelzonen oder zumindest eine der Sammelzonen auch nur aus den groben Partikeln gebildet werden kann. Für die praktische Realisierung hat es sich als zweckmäßig erwiesen, dass während der Ablage der linienförmigen Sammelzone - aus im Wesentlichen nur groben Partikeln - eine sich über die Bearbeitungsbreite erstreckende Sammellage aus kleinen Partikeln gebildet wird. Dieser Vorgang kann so gesteuert werden, dass diese "breit streuende" Sammellage mit der markanten, linienförmig ausgerichteten Sammelzone zu einer bereichsweisen, den "Unterboden" bildenden Mischstruktur-Lage zusammengefasst ist.

Dabei ist vorgesehen, dass die Sammelzone und die Sammellage im Wesentlichen gleichzeitig aus vorzugsweise den beiden Fraktionen der groben und feinen Partikel gebildet und als die Mischstruktur-Lage abgelegt werden. Die Optimierung dieses Sammelsystems sieht dabei vor, dass die kleinen Partikel der Sammellage unterhalb der steinfreien Nutzschicht in Form eines Beetes verteilt werden und dabei die vollständige Breite des Beetes erfassen.

Durch eine entsprechende Steuerung im Bereich der Separierstrecke wird erreicht, dass in einem frei wählbaren Bereich unterhalb der steinfreien Nutzschicht die zumindest eine linienförmige Sammelzone mit groben Partikeln gebildet wird. Dabei hat es sich gezeigt, dass die zumindest eine linienförmig verlaufende Sammelzone zweckmäßigerweise in einem jeweiligen Randbereich der steinfreien Nutzschicht bzw. am Rand eines Beetes platziert werden kann. Entsprechend der mehrmaligen Durchführung von Separierphasen auf einer entsprechend breiten Ackerfläche ist vorgesehen, dass die zumindest eine Sammelzone zwischen zwei als Nutzschicht benachbarten Beeten gebildet wird. Dabei ist in jedem Fall erreicht, dass die Sammelzone - und auch die Sammellage - unter dem Niveau der Nutzschichtlage verlaufen.

Auch bei der Ausbildung mehrerer Sammelzonen ist vorgesehen, dass diese wahlweise unter und/oder neben der Nutzschicht so abgelegt werden, dass bei mehreren linienförmigen Sammelzonen eine jeweils definierte Verteilung über die Bearbeitungsbreite erreicht wird und diese Verteilung auch für spätere Bearbeitungen nachvollziehbar ist.

Diese nachfolgende Bearbeitung sieht insbesondere vor, dass während der separierenden Behandlung einer Bodenschicht auch die jeweiligen, mit der Sammelzone zusammenwirkenden Nutzschichten als jeweilige Pflanzenaufnahmezonen profiliert werden können.

Ausgehend von bekannter Separiertechnik sieht eine weitere Variante des Verfahrens vor, dass während der Aufnahme des Gemisches zumindest eine einen jeweiligen "tiefer gelegten" Ablagebereich für die linienförmig verlaufende Sammelzone vorgebende Furche erzeugt wird. Dabei ist entsprechend der Bearbeitungsbreite vorgesehen, dass gleichzeitig mehrere, den Bereich einer jeweiligen Sammelzone vorgebende Furchen erzeugbar sind.

Ausgehend von der vorbeschriebenen Positionierung der linienförmigen Sammelzonen über die Bearbeitungsbreite des Systems ist vorgesehen, dass die jeweiligen Abstände von linienförmig erzeugten Sammelzonen auf zumindest ein Spurmaß einer landwirtschaftlichen Maschine o. dgl. Geräte abgestimmt werden. Damit kann einerseits eine definierte Fahrspur vorgesehen sein, oder für nachfolgende Bodenbearbeitungsgeräte sind die "steinhaltigen" Sammelzonen nachvollziehbar und ggf. von einer direkten Bearbeitung auszunehmen. Damit kann insbesondere eine effiziente Verschleißminderung an Bodenbearbeitungsgeräten erreicht werden.

Die zur Durchführung des vorbeschriebenen Verfahrens vorgesehene Einrichtung zur Behandlung von steinigen Ackerböden ist mit einem an sich bekannten Trenngerät versehen, das zumindest eine das oberhalb der Ackerfläche mit einem Förderer zugeführte Gemisch aufnehmende Separierstrecke aufweist. Mittels der Separierstrecke und den dabei vorgesehenen Werkzeugen können zumindest als grobe, kleine und feine Partikel definierbare Fraktionen des Gemisches getrennt werden. Nach diesen an sich bekannten Separierphasen mittels derartiger Trenngeräte wird hinter der Einrichtung eine Bodenstruktur gebildet, die aus einer gereinigten Nutzschicht mit feinen Partikeln sowie zumindest einer darunter befindlichen Ablageschicht mit groben und/oder kleinen Partikeln gebildet ist.

Ausgehend von dieser bekannten "willkürlichen" Verteilung der Partikel in einer Mischzone über die gesamte Breite der Nutzschicht ist die Einrichtung erfindungsgemäß so ausgebildet, dass die zumindest eine Separierstrecke des Trenngerätes eine spezielle Abfördereinheit aufweist, mit der eine konzentrierte Sammlung und Ablage einzelner Fraktionen möglich ist. Mit dieser Abfördereinheit kann zumindest eine aus dem Gemisch vorwählbare Partikel-Fraktion in zumindest einer linienförmig und unterhalb der Nutzschicht verlaufenden Sammelzone abgelegt werden. Mit dieser konstruktiv variabel gestaltbaren Abfördereinheit wird eine gezielte "Steuerung" des Gemischstromes innerhalb der Trenneinheit so erreicht, dass klassifizierbare Partikel-Größen mittels einer zusätzlichen Ablenkungsfunktion erfasst und abgelegt werden.

Diese Abfördereinheit ist dabei so in die Einrichtung integriert, dass die zumindest eine linienförmige Sammelzone in Fahrtrichtung nach vorn im Wesentlichen unterhalb der Abfördereinheit und innerhalb der Bearbeitungsbreite erzeugbar ist.

Eine weitere Ausführung dieser verbesserten Einrichtung sieht vor, dass zumindest ein Teilstrom mit die Sammelzone bildenden Teilen des Gemisches neben der von der Einrichtung definierten Bearbeitungsbreite in Fahrtrichtung nach vorn verlagert und hier unterhalb der Nutzschicht positioniert werden kann. Dazu ist ein zusätzlicher Förderer o. dgl. Transportglied mit der Einrichtung zu verbinden.

Die Ausführung des Trenngerätes sieht im Bereich der erfindungsgemäßen Abfördereinheit vor, dass diese in Fahrtrichtung der Einrichtung am vorderen Ende zumindest eines in Fahrtrichtung wirkenden Teilabschnitts der Separierstrecke angeordnet wird. Damit wird erreicht, dass der in Fahrtrichtung nach vorn über die gesamte Bearbeitungsbreite umgelenkte Förderstrom mit sämtlichen aufliegenden Partikeln gezielt beeinflusst werden kann und vor dem unter Schwerkraftwirkung erfolgenden Ablegen der Partikel-Fraktionen eine gezielte linienförmige Konzentration von Teilen des Förderstromes möglich wird.

Die praktische Realisierung dieser Einrichtung sieht vor, dass der mit dem Förderer in die Einrichtung zugeführte steinige Ackerboden im Bereich einer oben liegenden Aufbruchstrecke verlagert werden kann. Von dieser aus können jeweilige, als "Steinriesen" definierte Partikel-Fraktionen in insbesondere ein nachgeordnetes Sammelgerät ausgeleitet werden. Damit wird erreicht, dass nur die groben, kleinen und feinen Partikel als jeweilige Fraktionen in das nachfolgende Separiersystem mit der Umlenkstrecke überführbar sind.

Die komplexe Ausbildung der Einrichtung sieht vor, dass die ein Brechen, Zerkleinern und/oder Sieben des Gemisches bewirkende erste Aufbruchstrecke an ihrem Förderende mit zumindest einer zweiten Aufbereitungsstrecke zusammenwirkt, sich an diese zumindest eine das Gemisch in Fahrtrichtung umlenkend bewegende Horizontalfördereinheit anschließt und vor dieser die in Fahrtrichtung dann vorn liegende Abfördereinheit zur Erzeugung der Sammelzone bzw. mehrerer Sammelzonen vorgesehen ist.

Eine Variante dieses Basis-Konzeptes sieht vor, dass im Bereich der zweiten - im Wesentlichen vertikal nach unten ausrichtbare Separierwerkzeuge aufweisenden - Aufbereitungsstrecke eine das unter Schwerkraftwirkung und/oder Beschleunigung durch Separierwerkzeuge fallende Gemisch zur Horizontalfördereinheit ableitende Prallplatte vorgesehen ist. Diese kann ebenfalls eine Siebfunktion aufweisen.

Die nachfolgend für die gezielten Separierungen zur Bildung der Sammelzone(n) vorgesehene Horizontalfördereinheit ist dabei mit einem Höhenabstand im Wesentlichen parallel unter der ersten Aufbruchstrecke angeordnet. Entsprechend den zu bearbeitenden Bodenstrukturen ist auch die Anordnung der Horizontalfördereinheit mit einer in Fahrtrichtung ansteigenden oder fallenden Neigung denkbar. Damit kann der Separierprozess entsprechend durch Brems- oder Beschleunigungsimpulse beeinflusst werden.

Insbesondere ist vorgesehen, dass die Horizontalfördereinheit mit zumindest zwei durch eine Fallstufe getrennten Teilbereichen versehen ist. Dabei sind insbesondere unterschiedliche Förderwerkzeuge in diesen Teilbereichen vorgesehen, wobei durch höhenverstellbare Wellen mittels der Separierwerkzeuge ein zusätzlicher Kaskaden-Effekt erzeugbar ist.

Die am vorderen Ende der Horizontalförderstrecke befindliche Abfördereinheit ist erfindungsgemäß mit zumindest einer Profil-Transportwalze versehen, die zur Erzeugung der linearen Sammelzonen als Funktionsbaugruppe vorgesehen ist. Diese rotierend antreibbare Transportwalze weist in Querrichtung zwischen zwei randseitigen zylindrischen Teilbereichen zumindest eine tonnenförmige Leitprofilierung auf.

Mit dieser konzeptionellen Gestaltung der Profil-Transportwalze wird erreicht, dass das von der Abfördereinheit geleitete Gemisch im Bereich eines oberseitigen Wellenprofils erfassbar und bei dem dabei erfolgenden Weitertransport aus einer der Fahrtrichtung entsprechenden Verlagerungsrichtung abgelenkt werden kann.

Diese Ablenkungswirkung zur gezielten Bildung der linienförmigen Sammelzonen ist so konzipierbar, dass die jeweilige tonnenförmige Leitprofilierung als ein zu den zylindrischen Teilbereichen hin abfallender Wellenberg wirksam ist. Von diesem Wellenberg aus sind jeweils voreinstellbare Größen von Partikel-Fraktionen des Gemisches zu den ein Wellental bildenden zylindrischen Teilbereichen hin ableitbar.

Eine effektive Gestaltung dieses "Ableit-Systems" sieht vor, dass die Transportwalze aus mehreren, in Achsrichtung mit Spaltabstand zueinander angeordneten Mitnehmerscheiben und/oder-sternen gebildet ist. Dabei ist vorgesehen, dass das zwischen diesen scheiben- bzw. sternförmigen Mitnehmern vorgesehene Spaltmaß entsprechend den zu sortierenden Partikel-Fraktionen variabel bemessen werden kann und damit der Effekt des "Durchfallens" und des "Weiterrollens" variabel auf die Konsistenz des Gemisches einstellbar ist.

Ausgehend von dem vorbeschriebenen Konzept der Abfördereinheit mit der zumindest einen Profil-Transportwalze ist vorgesehen, dass zur Optimierung der "Stein-Sammel-Phasen" diese funktionsintegrierte Abfördereinheit aus mehreren Profil-Transportwalzen gebildet wird. Diese mehreren Transportwalzen sind in Förderrichtung hintereinander angeordnet, so dass insbesondere die Zonen mit zylindrischen Teilbereichen und die Bereiche mit der zumindest einen tonnenförmigen Leitprofilierung naheliegend aneinandergrenzen. Damit ist eine direkte Weitergabe der Partikel auf rotierenden Walzenumfängen möglich. Diese beiden, in Querrichtung wellenförmigen Transportzonen können dabei mit jeweils variabel vorgebbaren Durchmessern und/oder Breitenmaßen ausgeführt sein.

Zur Erzielung der in Abwurfrichtung linienförmigen Sammelzone ist vorgesehen, dass die Transportwalzen mit jeweiligen, in Förderrichtung unmittelbar aneinandergrenzenden Berg- und Wellenprofilen angeordnet werden. Gleichzeitig ist vorgesehen, dass diese Wellenprofile in Förderrichtung zur Abwurfkante hin enger werdende Wellentäler bilden und mit diesen Wellentälern zumindest ein sich verbreiternder Wellenberg zusammenwirkt. Damit wird erreicht, dass mittels der in Förderrichtung enger werdenden Wellentäler die jeweils von den Wellenbergen abrollenden groben Partikel zusammengeführt werden und damit an der Abwurfkante mit den gefüllten Wellentälern die "schmale" lineare Sammelzone gebildet wird.

Die konstruktive Umsetzung dieser Profil-Transportwalzen ist effektiv dadurch möglich, dass im Bereich von jeweiligen - die Wellenberge bzw. Wellentäler bildenden - Bauteilen insbesondere Sternräder oder Mitnahmescheiben unterschiedlicher Durchmesser vorgesehen sind. Im Bereich der die Partikel ableitenden tonnenförmigen Leitprofilierungen hat sich die Aneinanderreihung von plattenförmigen Trennscheiben - mit einer speziellen Umfangsprofilierung - als vorteilhaft herausgestellt, wobei in Richtung der Stützachse entsprechende Zwischenräume durch Distanzstücke gebildet sind.

Weitere Einzelheiten und Vorteile ergeben sich aus der nachfolgenden Beschreibung in Verbindung mit den Zeichnungen, in denen eine Einrichtung zur Durchführung des Verfahrens zum Separieren von steinigen Ackerböden schematisch veranschaulicht ist. In der Zeichnung zeigen:
- Fig. 1: eine Seitenansicht der erfindungsgemäßen Einrichtung zum Behandeln von steinigen Ackerböden,
- Fig. 2: eine Perspektivdarstellung der Einrichtung gemäß Fig. 1,
- Fig. 3: eine Prinzipdarstellung des mit der Einrichtung realisierbaren Verfahrensablaufs,
- Fig. 4 und Fig. 5: jeweilige Prinzipdarstellungen der Einrichtung gemäß der Konstruktion in Fig. 2,
- Fig. 6 und Fig. 7: jeweilige schematische Darstellungen ähnlich Fig. 3 mit Erzeugung der linearen Sammelzonen,
- Fig. 8 und Fig. 9: jeweilige Ansichten einer erfindungsgemäßen Abfördereinheit für die Einrichtung gemäß Fig. 2,
- Fig. 10: eine Prinzipdarstellung unterschiedlicher Bearbeitungsphasen im Bereich eines steinigen Ackerbodens bei Herstellung eines Beetes,
- Fig. 11: jeweilige Prinzipdarstellungen ähnlich Fig. 10 mit einer Furchenbildung bei der Aufnahme des Ackerbodens und Darstellung nachfolgender Bearbeitungsphasen, und
- Fig. 12: eine Prinzipdarstellung der Einrichtung ähnlich Fig. 5 mit einer neben der Separierstrecke nach vorn gerichteten Umlenkung des separierten Förderstromes.

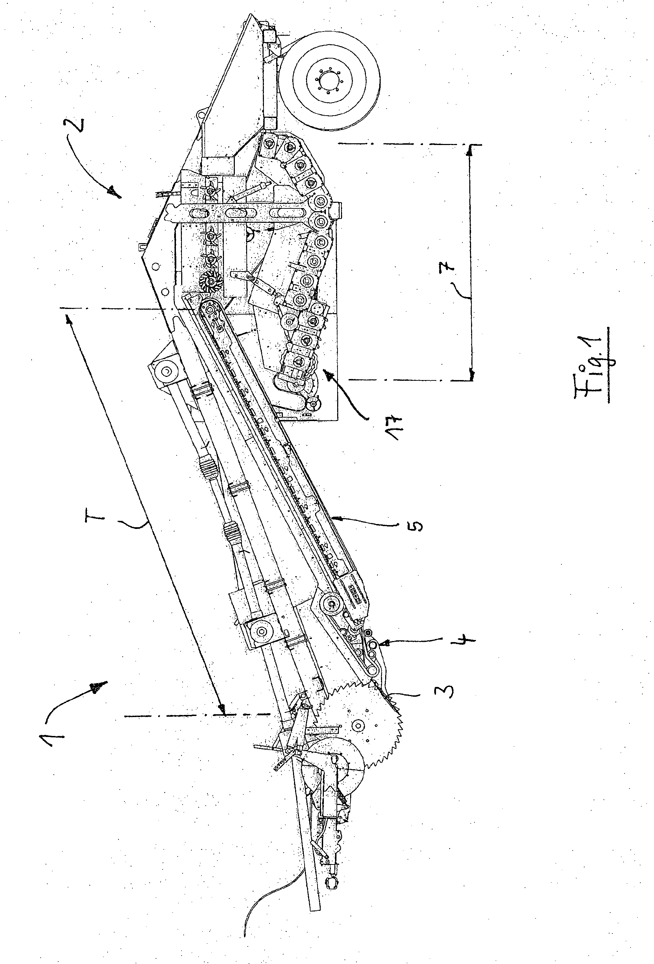

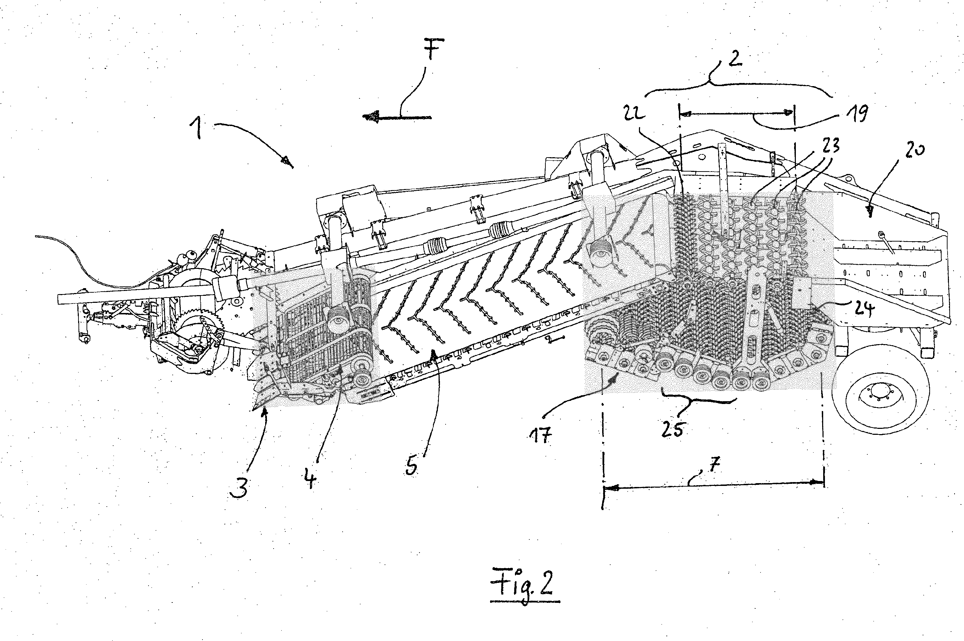

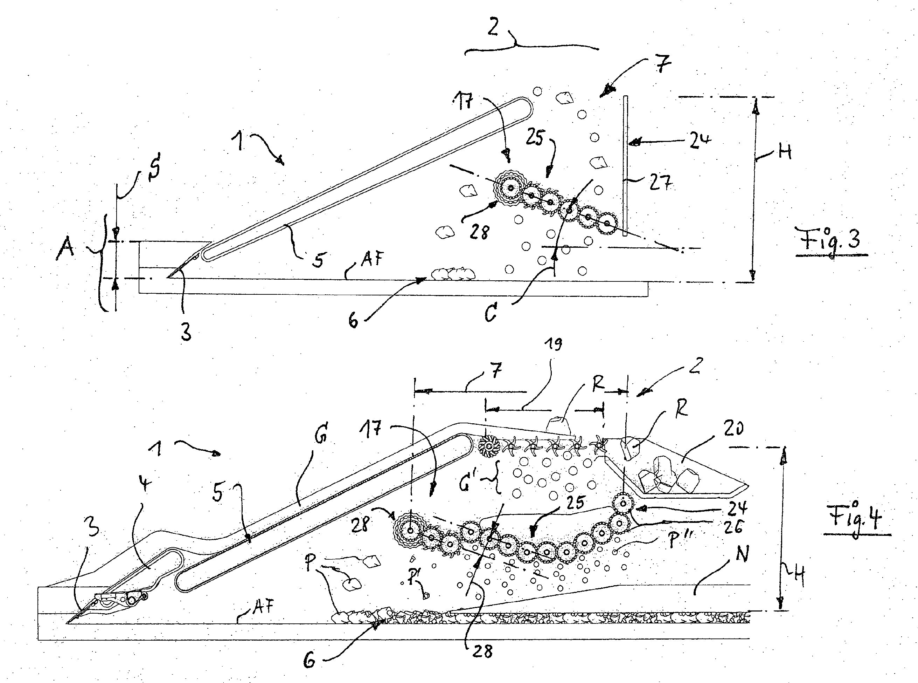

In Fig. 1 und Fig. 2 ist eine Einrichtung 1 zur Behandlung von steinigen Ackerböden A (Fig. 3) dargestellt. Mittels dieser Einrichtung 1 wird ein in Bearbeitungsbreite B als Bodenschicht S aufgenommenes Gemisch G (Fig. 4) steinigen Ackerbodens A entlang einer entgegen der Fahrtrichtung F ansteigenden Förderstrecke T in den Bereich eines mit Abstand H über einer Ackerfläche AF angeordneten Trenngerätes 2 bewegt. In an sich bekannter Ausführung wird der Ackerboden A dabei im Bereich von vorderseitigen Scharen 3 erfasst und über jeweilige Bandförderer 4 und 5 entlang der Förderstrecke T zum Trenngerät 2 hin bewegt.

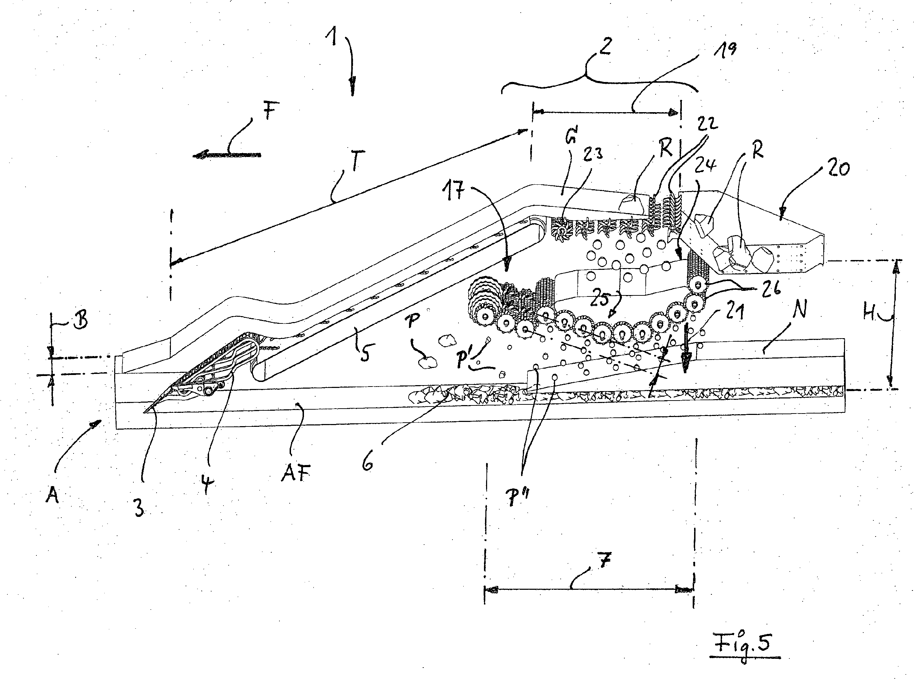

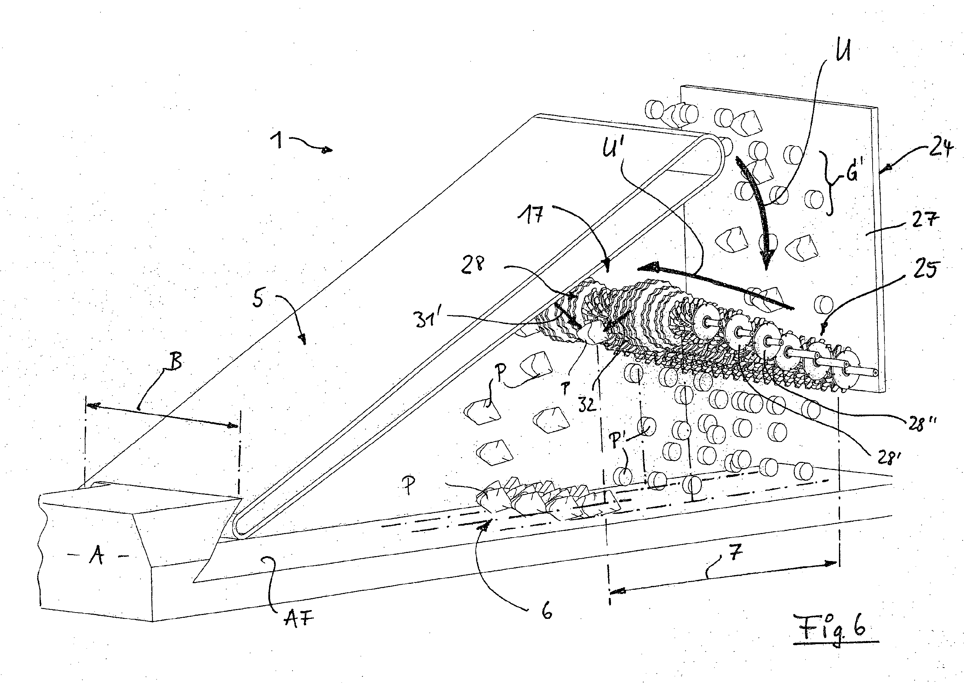

Im Bereich des Trenngerätes 2 ist zumindest eine Separierstrecke 7 so ausgebildet, dass insbesondere nach einer zumindest phasenweise erfolgenden Umlenkung (Pfeil U, Fig. 6) von Teilen des Gemisches G jeweilige unterschiedliche Gemisch-Fraktionen in Form von groben, kleinen und feinen Partikeln P, P', P" (Fig. 5) nacheinander oder gleichzeitig aussortiert werden.

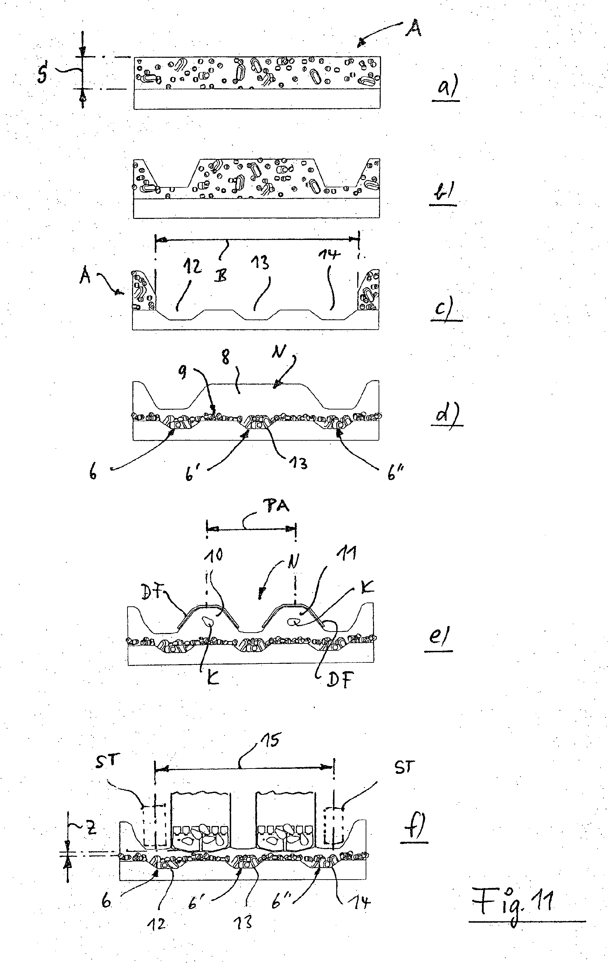

Bei einem bekannten Verfahrensablauf gemäß GB 9605490 werden mit gattungsbildender Verfahrensführung die Partikel P, P', P" des Gemisches G in eine über die Breite B der Ackersohle AF abgelegte Mischschicht verlagert (nicht dargestellt), und oberhalb dieser wird eine Nutzschicht N (ähnlich: Fig. 11d) mit im Wesentlichen nur feinen Partikeln P" als weitgehend steinfreie Pflanzzone erzeugt.

Ausgehend von diesem Prinzip der Gemisch-Umlenkung U sieht das erfindungsgemäß verbesserte Verfahren nunmehr vor, dass zumindest eine Fraktion der aus dem Gemisch G aussortierbaren Partikel P, P', P" in zumindest einer im Wesentlichen linienförmig und unterhalb der Nutzschicht N verlaufenden Sammelzone 6 (Fig. 4) abgelegt wird.

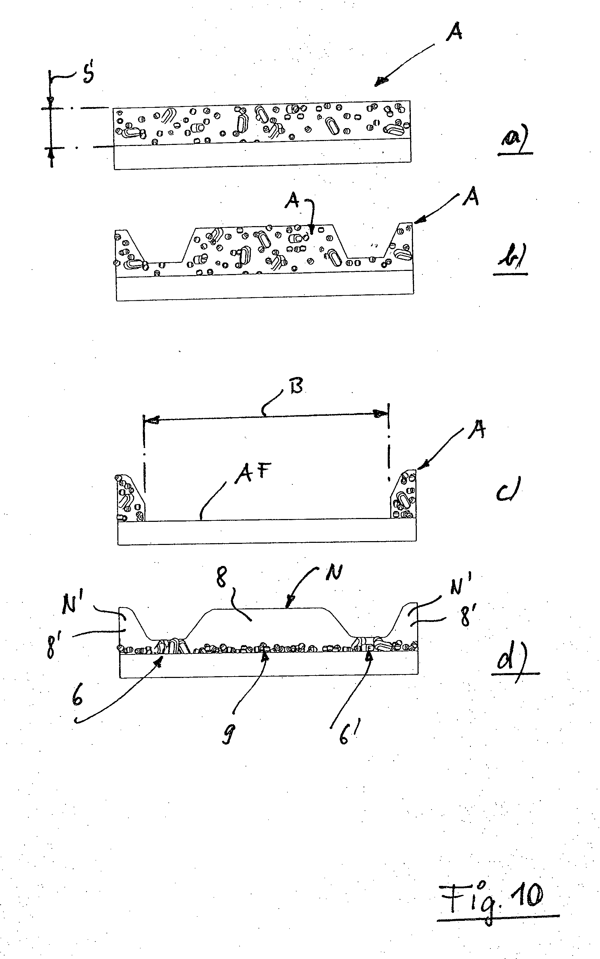

Aus den Prinzipdarstellungen gemäß Fig. 3 bis Fig. 7 (in Zusammenschau mit Fig. 10 und Fig. 11) wird diese erfindungsgemäße Verfahrensführung deutlich, wobei die zumindest bereichsweise unterhalb der Separierstrecke 7 verlaufende Sammelzone 6 als "Linienablage" durch nur die eine, innerhalb der Bearbeitungsbreite B erfolgende Umlenkung U' von Teilen des Gemisches G, nämlich in Fahrtrichtung nach vorn, gebildet werden kann. Denkbar ist auch, dass mehrere "Umlenkphasen" in das System der Separierstrecke 7 integriert werden (nicht dargestellt). Dabei kann jede der Umlenkungen mit unterschiedlicher Förderstrecken-Länge nach vorn verlaufen und gemischte und/oder parallele linienförmige Sammelzonen bilden.

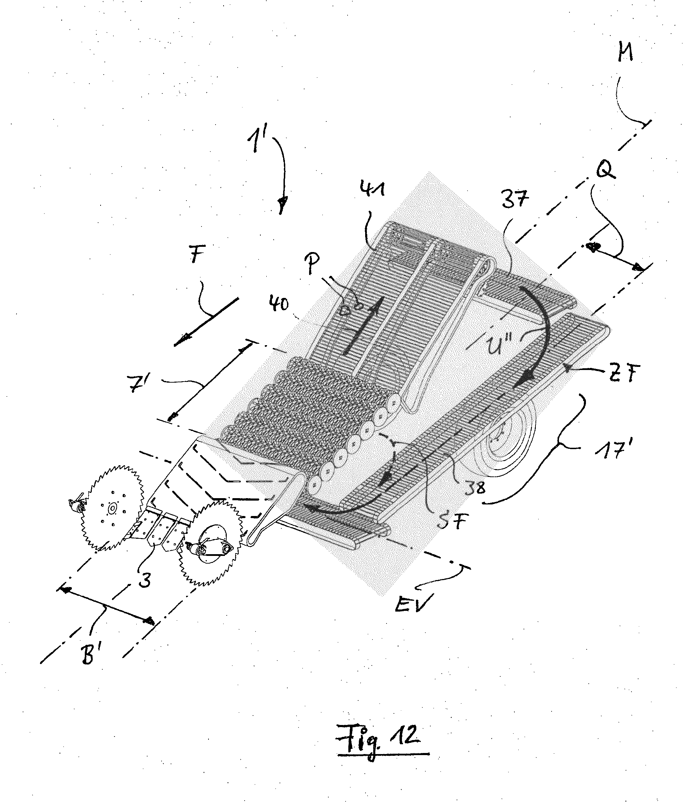

Eine weitere denkbare Verfahrensvariante dieses "nach-vorn-verlagern" der Partikel für die Sammelzone 6 sieht vor, dass zumindest ein Teilstrom der Partikel des Gemisches G durch eine seitlich neben der Bearbeitungsbreite B' verlaufende Förderstrecke (Fig. 12) in Fahrtrichtung F nach vorn und hier unter die Nutzschicht N verlagert werden kann.

Die kompakte Ausführung des in Fig. 1 und Fig. 2 dargestellten Systems sieht vor, dass innerhalb der Bearbeitungsbreite B auch mehrere der Sammelzonen 6, 6', 6" gebildet werden können (Schemadarstellung gemäß Fig. 11d bis f). Dabei ist denkbar, dass während einer in Fahrtrichtung F erfolgenden umgelenkten Förderphase des Gemisches G mehrere Sammelzonen 6 mit unterschiedlicher Verteilung der Partikel P, P', P" gebildet werden.

In Ergänzung der vorbeschriebenen Aussortierung von Partikeln P, P' und P" ist das System nicht auf diese Gemischstrukturen beschränkt. Vielmehr ist auch denkbar, dass im Bereich eines innerhalb der Bearbeitungsbreite B definierten Beetes 8 (Fig. 10a, b) als die Nutzschicht N sämtliche störenden Steine, Fremdkörper o. dgl. Fraktionen aufgenommen werden. Diese können dann insgesamt im Ergebnis der Separierphase als linienförmige Sammelzonen 6, 6' in einem später unterhalb der Beet-Nutzzone N befindlichen Bereich abgelegt werden.

In Anpassung an unterschiedliche Bodenbedingungen - beispielsweise mit geringem Steinbesatz - ist vorgesehen, dass die Sammelzonen 6, 6', 6" oder zumindest eine der Sammelzonen nur aus den groben Partikeln P gebildet wird.

In Fig. 10 ist der denkbare Verfahrensablauf durch schematische Schnittdarstellungen verdeutlicht. In dem Teilbild 10a ist ein Querschnitt des Ackerbodens A mit entsprechenden Gesteinseinschlüssen dargestellt. In diesem Ackerboden A kann durch entsprechende Vorbearbeitung eine das Beet 8 bildende Furchenführung 9, 10 durchgeführt werden (Fig. 10b). Daran anschließend erfolgt die in Darstellung gemäß Fig. 10c gezeigte Aufnahme dieser vorbereiteten Beet-Struktur 8, so dass danach die in Teilbild 10d ersichtliche Verteilung der Partikel P, P', P" erreicht ist. Dabei wird deutlich, dass während der Ablage der linienförmigen Sammelzone 6, 6' aus im Wesentlichen nur groben Partikeln P eine sich über die Bearbeitungsbreite B erstreckende Sammellage 9 aus kleinen Partikeln P' gebildet wird. Dabei wird die Verfahrensführung so gestaltet, dass diese Sammellage und die Sammelzone 6 zu einer bereichsweisen Mischstrukturlage (Fig. 10d) zusammengefasst werden.

Es versteht sich, dass die Sammelzone 6 und die Sammellage 9 im Wesentlichen gleichzeitig aus den beiden Fraktionen P, P' gebildet und als die Mischstrukturlage abgelegt werden. Eine weitere Verfahrensführung sieht vor, dass die kleinen Partikel P' der Sammellage 9 unterhalb der steinfreien Nutzschicht in Form des Beetes 8 über dessen vollständige Breite verteilt werden.

Aus der Zusammenschau von Fig. 10 und Fig. 11 wird deutlich, dass in einem frei wählbaren Bereich unterhalb der steinfreien Nutzschicht N die zumindest eine linienförmige Sammelzone 6 mit groben Partikeln P gebildet werden kann. In der Darstellung gemäß Fig. 10d und Fig. 11d wird deutlich, dass die zumindest eine linienförmig verlaufende Sammelzone 6 in einem jeweiligen Randbereich der steinfreien Nutzschicht N gebildet werden kann. Dabei wird erreicht, dass die zumindest eine Sammelzone 6 zwischen zwei als jeweilige Nutzschichten N benachbarten Beeten 8, 8' (Fig. 10d) gebildet ist.

Das System der linienförmig ausgebildeten Sammelzone 6, 6', 6" sieht vor, dass wahlweise unter und/oder neben der Nutzschicht N eine entsprechende Ablage erfolgen kann. Aus der Abfolge von Bearbeitungsphasen in Fig. 11a bis 11d wird deutlich, dass hier die wahlweise Anordnung von Sammelzonen 6, 6', 6" erfolgt ist. Aus der Darstellung gemäß Fig. 11e wird deutlich, dass während der separierenden Behandlung einer Bodenschicht A die jeweiligen, mit den Sammelzonen 6, 6', 6" zusammenwirkenden Nutzschichten N als eine jeweilige Pflanzenaufnahmezone - mit Abstand PA - profiliert werden können (Zonen 10 und 11, Fig. 11e). Dargestellt sind zwei Kartoffeldämme 10, 10' mit Knollen K, wobei die Bearbeitung mit einem Dammformblech DF angedeutet ist.

Ausgehend von der Aufnahme des Gemisches G über die volle Bearbeitungsbreite B - gemäß Fig. 10c - wird in der Darstellung gemäß Fig. 11c eine weitere Verfahrensvariante dargestellt. Hier ist gezeigt, dass während der Aufnahme des Gemisches G zumindest eine - später den jeweiligen Ablagebereich für die jeweilige linienförmig verlaufende Sammelzone 6 vorgebende - Furche 12, 13, 14 erzeugt werden kann. In diesen Bereichen kann dann eine gezielte Ablage der Steine (Fig. 11d) erfolgen.

Eine weitere effiziente Nutzung des Systems mit linienförmig verlaufenden Sammelzonen 6, 6', 6" sieht vor, dass deren jeweilige Abstände auf zumindest ein Spurmaß 15 für die Stützräder ST einer landwirtschaftlichen Maschine o. dgl. Geräte abgestimmt werden kann (Fig. 11f). In der Darstellung gemäß Fig. 11f wird auch deutlich, dass bei einem nach der Wachstumsphase der Pflanzen erfolgenden Rodevorgang eine effiziente Einstellung von Bearbeitungswerkzeugen 16, 16' so möglich ist, dass in einer "verschleißarmen" Zone (Höhenabstand Z, Fig. 11f) der Erntevorgang erfolgt und auch die in der Furche 12, 13,14 abgelegten Stein-Strukturen P den Erntevorgang nicht beeinflussen.

Ausgehend von der vorbeschriebenen Verfahrensführung zu Behandlung von steinigen Ackerböden ist eine spezielle Einrichtung 1 für diesen Separiervorgang vorgesehen. Dazu ist das die Separierstrecke 7 aufweisende Trenngerät 2 an die vorgesehene Optimierung der "Steinsammlung" angepasst. Ein besonders effizientes System sieht vor, dass die zumindest eine Separierstrecke 7 des Trenngerätes 2 erfindungsgemäß mit einer Abfördereinheit 17 versehen wird.

Damit wird eine zur Verfahrensführung denkbare Konstruktion vorgeschlagen, mit der zumindest eine aus dem Gemisch G vorwählbare Partikel-Fraktion P, P', P" in der zumindest einen linienförmig und unterhalb der Nutzschicht N verlaufenden Sammelzone 6 abgelegt werden kann.

Ausgehend von der hier verfahrensmäßig eine Basisfunktion bildenden Umlenkung U, U' (Fig. 6) innerhalb der Einrichtung 1 ist vorgesehen, dass die zumindest eine linienförmige Sammelzone 6 im Wesentlichen unterhalb der Abfördereinheit 17, in Fahrtrichtung F nach vorn und innerhalb der Bearbeitungsbreite B abgelegt werden kann.

In Abweichung zu dieser - eine "direkte" Ablage der Steine bewirkenden - Konstruktion ist eine weitere Ausführung denkbar, bei der zumindest ein Teilstrom der die Sammelzone 6 bildenden Partikel P, P', P" des Gemisches G neben der von der Einrichtung 1 definierten Bearbeitungsbreite B in Fahrtrichtung F nach vorn verlagert werden kann. Auch bei dieser, beispielsweise mittels eines zusätzlichen Förderers (nicht dargestellt) funktionierenden Verfahrensführung wird auch eine konstruktiven Variante erreicht, bei der die Sammelzone 6 unterhalb der später zu bearbeitenden Nutzschicht N erzeugt wird.

Die bevorzugte konstruktive Umsetzung der in das System integrierten Abfördereinheit 17 als effektive Funktionsbaugruppe sieht vor, dass diese in Fahrtrichtung der Einrichtung 1 am vorderen Ende zumindest eines in Fahrtrichtung F wirkenden Teilabschnitts 18 der Separierstrecke 7 angeordnet ist (Fig. 2).

Für die praktische Realisierung des Systems - insbesondere bei sehr steinhaltigen Böden - ist vorgesehen, dass der mit den Scharen 3 in die Einrichtung 1 zugeführte steinige Ackerboden A als aufgelockertes Gemisch G über die Förderer 4, 5 in den Bereich einer oben liegenden Aufbruchstrecke 19 verlagerbar ist. Von dieser Aufbruchstrecke 19 können jeweilige, in Form von Steinriesen R ausgebildete Fraktionen in insbesondere ein nachgeordnetes Sammelgerät 20 abgeleitet werden (Fig. 4, Fig. 5). Damit wird - auch bei ungünstigen Bodenstrukturen - erreicht, dass nur die groben, kleinen und feinen Partikel P, P', P" als jeweilige Fraktionen in den nachfolgenden, unterhalb der Aufbruchstrecke 19 befindlichen Teil des Separiersystems überführt werden oder direkt auf die Nutzschicht N durchfallen (Pfeil 21, Fig. 5).

Aus der Zusammenschau von Fig. 2, Fig. 4 und Fig. 5 wird die konstruktive Gestaltung der Aufbruchstrecke 19 mit den walzenförmigen Separierwerkzeugen 22 und 23 deutlich. Diese ein Brechen, Zerkleinern und/oder Sieben des Gemisches G bewirkende erste Aufbruchstrecke 19 wirkt an ihrem Förderende mit zumindest einer zweiten Aufbereitungsstrecke 24 zusammen (Fig. 3). An diesem optional zu installierenden Teil des Systems schließt sich der funktional wesentliche Bereich einer Horizontalfördereinheit 25 (Fig. 2 bis Fig. 7) an. In Fahrtrichtung vor dieser Horizontalfördereinheit 25 ist die dann vorn liegende Abfördereinheit 17 zur Erzeugung der Sammelzonen 6, 6', 6" vorgesehen.

Die optionale Anordnung der zweiten Aufbereitungsstrecke 24 sieht vor, dass diese mit im Wesentlichen vertikal nach unten ausrichtbaren Separierwerkzeugen 26 versehen sein kann. Dabei ist insbesondere eine das fallende Gemisch G' zur Horizontalfördereinheit 25 hin ableitende Prallplatte 27 vorgesehen. Aus den Prinzipdarstellungen gemäß Fig. 3 bis Fig. 7 wird deutlich, dass die Horizontalfördereinheit 25 mit einem auch variabel vorgebbaren Höhenabstand im Wesentlichen parallel unter der ersten Aufbruchstrecke 19 verläuft. Dabei ist insbesondere vorgesehen, dass diese Horizontalförderstrecke 25 in Fahrtrichtung F auch mit einer entsprechenden Systemneigung C (Fig. 3) ausrichtbar ist. Denkbar ist dabei, dass diese Neigung C durch nicht näher dargestellte Stellelemente auch einstellbar ist und damit auf unterschiedliche Bodenstrukturen reagiert werden kann.

Eine weitere Gestaltung der Horizontalförderstrecke 25 sieht vor, dass diese in Förderrichtung U' aus mehreren Teilbereichen aufgebaut werden kann, wobei in der dargestellten Ausführung (Fig. 4, Fig. 5) zumindest zwei durch eine Fallstufe 28 getrennte Teilbereiche definierbar sind. Damit wirkt eine kaskadenartige Fördersituation für das aufliegende Transportgut G'.

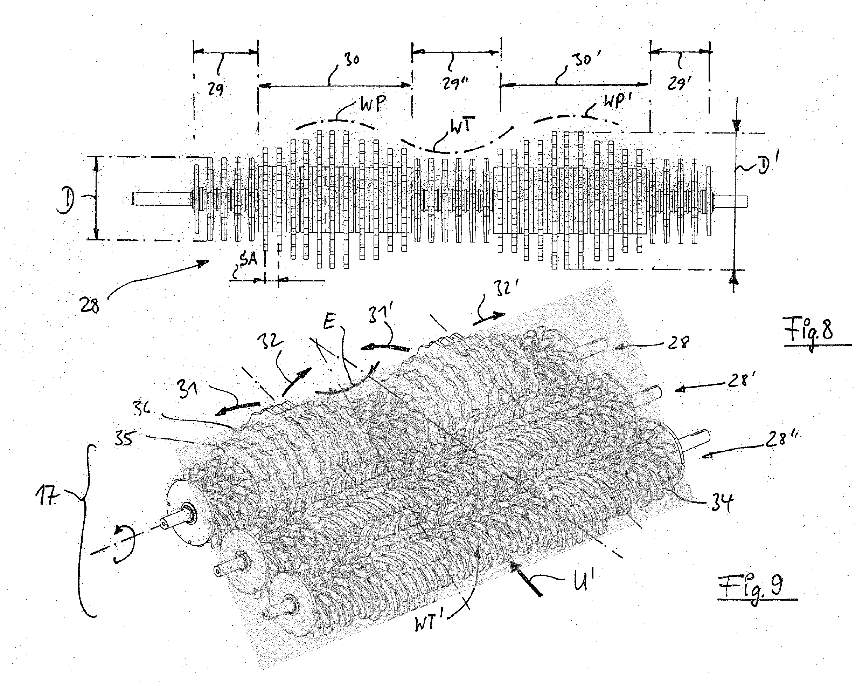

Die als erfindungswesentlich herausgestellte Konstruktion im Bereich der Abfördereinheit 17 sieht vor, dass in deren Bereich zumindest eine Profil-Transportwalze 28 (Fig. 5, Fig. 8) vorgesehen ist. Diese Profil-Transportwalze 28 ist mit einer in Querrichtung verlaufenden Funktionsprofilierung versehen, wobei zwischen zwei randseitigen zylindrischen Teilbereichen 29, 29' zumindest eine tonnenförmige Leitprofilierung 30 vorgesehen ist.

In der aus Fig. 8 ersichtlichen Einzeldarstellung dieser Transportwalze 28 ist gezeigt, dass diese zwei tonnenförmige Leitprofilierungen 30, 30' aufweist und damit ein mittlerer zylindrischer Teilbereich 29" definiert wird.

Für den vorbeschriebenen Separierprozess zur Erzeugung der Sammelzonen 6, 6', 6" ist die funktionale Wirkung der Abfördereinheit 17 auf das Gemisch G' entscheidend. Aus der Zusammenschau der Prinzipdarstellungen gemäß Fig. 6 bis Fig. 9 wird deutlich, dass das von der Abfördereinheit 17 übernommene Gemisch G' in Umlenkrichtung U' verlagert und dabei im Bereich eines oberseitigen Wellenprofils WP (Fig. 8) von der Transportwalze 28 erfasst wird. Dabei erfolgt nunmehr beim Weitertransport eine Ablenkung der "großen" Partikel, derart, dass die Teile aus ihrer der Fahrtrichtung F entsprechenden Verlagerungsrichtung gemäß Umlenkung U' in Querrichtung abgelenkt und damit gezielt in Richtung des Wellentals WT bewegt werden.

Diese gezielte "mechanische" Ablenkung ist in Fig. 9 durch entsprechende Pfeile 31, 32 und 31', 32' verdeutlicht. Mit dieser Konzeption der Transportwalze 28 wird deutlich, dass die tonnenförmige Leitprofilierung 30, 30' als ein zu den zylindrischen Teilbereichen 29, 29', 29" hin abfallender Wellenberg WP wirksam ist und von diesem aus jeweils voreinstellbare Größen von - nicht durch die Separierstrecke hindurch fallenden - Fraktionen P, P', P" des Gemisches G' zu den das Wellental WT bildenden zylindrischen Teilbereichen 29, 29', 29" hin ableitbar sind.

Aus den Einzeldarstellungen gemäß Fig. 8 und Fig. 9 wird eine weitere Ausführung deutlich, wobei die Transportwalze 28 aus mehreren, in Achsrichtung mit Spaltabstand SA zueinander angeordneten Mitnahmescheiben und/oder -sternen 33 besteht. Dieses Spaltmaß SA kann entsprechend den für die Sammelzone 6 zu sortierenden Fraktionen P, P', P" variabel bemessen sein.

Eine weitere konstruktive Verbesserung im Bereich der Abfördereinheit 17 - im Zusammenwirken mit der Horizontalfördereinheit 25 - kann dadurch erreicht werden, dass dieser zu Bildung der Sammelzonen 6, 6', 6" wesentliche Teilbereich der Separierstrecke aus mehreren der Profil-Transportwalzen gebildet wird.

Dieser Systemaufbau wird durch die Darstellung von drei Transportwalzen 28, 28', 28" (Fig. 5 bis Fig. 9) deutlich. Diese in Förderrichtung U' der Abfördereinheit 17 benachbarten Transportwalzen 28, 28', 28" sind so angeordnet, dass die Zone mit zylindrischen Teilbereichen 29, 29', 29" und den jeweiligen Bereich mit der zumindest einen tonnenförmigen Leitprofilierung 30, 30' jeweils variabel vorgebbare Durchmesser D, D' und Breitenmaße (Fig. 8) aufweisen können.

Bei der aus Fig. 9 ersichtlichen Anordnung dieses Mehr-Profil-Systems wird deutlich, dass die mit mehreren Transportwalzen 28, 28', 28" versehene Abfördereinheit 17 jeweilige, in Förderrichtung U' aufeinanderfolgende Wellenprofile mit Wellenbergen WP und Wellentälern WT aufweist. Dabei ist diese Profilierung so ausgerichtet, dass in Förderrichtung U' enger werdende Wellentäler WT' gebildet werden (Winkel E, Fig. 9) und mit diesen sich "düsenartig" verengenden Wellentälern WT' die beiden sich verbreiternden Wellenberge WP, WP' zusammenwirken.

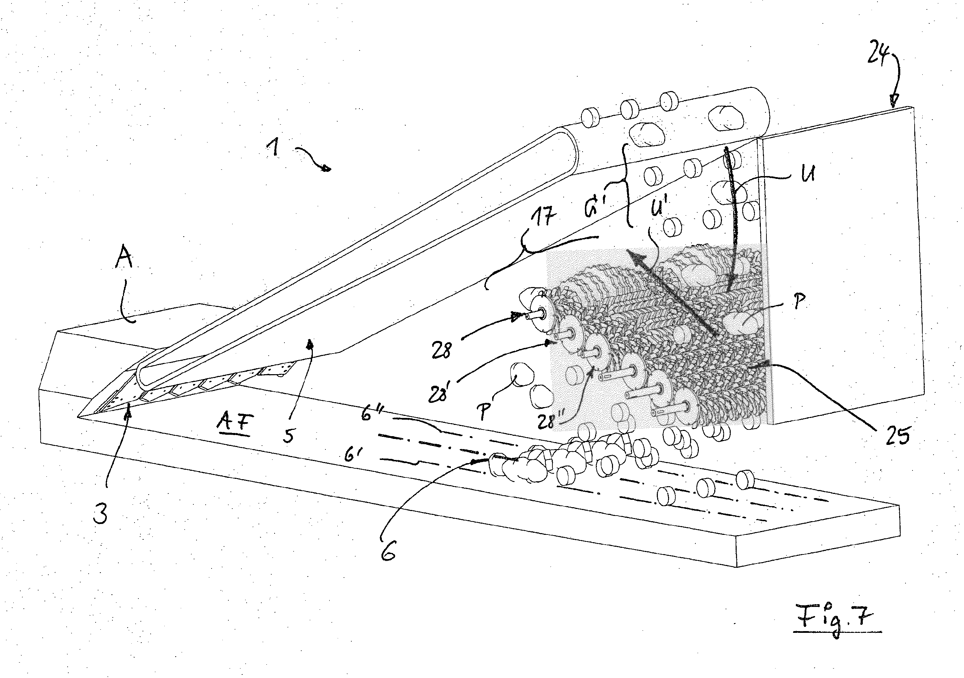

Auf Grundlage dieser funktionalen Profilierungen im System wird erreicht, dass im Bereich der in Förderrichtung U' enger werdenden Wellentäler WT' zumindest die jeweils groben Partikel P zusammenführbar sind (Fig. 6, Fig. 7) und diese zusammengeführten Partikel P zu einer der schmalen linearen Sammelzonen 6, 6', 6" hin verlagert werden (Fig. 7).

Für die konstruktive Umsetzung dieses Mehr-Profil-Systems im Bereich der Abfördereinheit 17 sind weitere, nicht näher dargestellte und konstruktiv variable Gestaltungen der Einzelteile denkbar. In den dargestellten Ausführungen wird deutlich, dass die jeweiligen Transportwalzen 28, 28', 28" - ähnlich den Walzenteilen der vorgelagerten Förderzone - mit jeweiligen, im Bereich von Wellenberg WP und Wellental WT variabel ausgebildete Durchmesser D, D' aufweisenden Sternrädern 34 versehen sind.

Für zumindest eine der das Transportgut G' ableitenden tonnenförmigen Leitprofilierungen - nämlich die Profilierung der vorn liegenden Transportwalze 28 - hat es sich als vorteilhaft herausgestellt, in diesem Bereich plattenförmige Trennscheiben 35 mit einer Umfangsprofilierung 36 vorzusehen (Fig. 9).

In Fig. 12 ist die zweite Ausführung der erfindungsgemäßen Einrichtung 1' als ein System dargestellt, bei dem die Separierstrecke 7' mit einem zusätzlichen Förderer ZF als "nebengeordnete" Abfördereinheit 17' zusammenwirkt. Der hier nicht dargestellte Förderstrom des Gemisches G gelangt auf die Separierstrecke 7' und kann unterhalb dieser - in einer ersten denkbaren Ausführung - mittels eines Förderers in Querrichtung (Pfeil SF) auf den seitlichen Förderer ZF übergeben und durch eine zweite Querförderung in eine Einförderebene EV vorn unter die Nutzschicht verlagert werden.

Die Details in Fig. 12 zeigen insgesamt eine Abfördereinheit 17', bei der die von der Separierstrecke 7' abgeleiteten Partikel P zuerst entgegen der Fahrtrichtung F verlagert (Pfeil 40, auf einem Förderer 41) und dann über einen ersten Querförderer 37 in Umlenkrichtung U" auf einen - mit Abstand Q - neben der Separierstrecke 7' verlaufenden Längsförderer 38 nach vorn verlagert werden. An dessen vorderen Ende ist der zweite Querförderer 39 vorgesehen, mit dem die Einförderung der Partikel in Richtung der Einförderebene EV erfolgt, so dass damit die zumindest eine erfindungsgemäße Sammelzone positionsgenau gebildet ist.

Bei diesem "nebengeordneten" System der Einrichtung 1' ist ebenso denkbar, dass auf der zur Längsmittelebene M gegenüberliegenden Seite der Separierstrecke 7' die Abfördereinheit 17' vorgesehen ist. Ebenso kann hier auch eine zweite der Abfördereinheiten 17' (nicht dargestellt) angeordnet werden.

## Patentansprüche

1. Verfahren zum Behandeln von steinigen Ackerböden, wobei ein in Bearbeitungsbreite (B) als Bodenschicht aufgenommenes Gemisch (G) steinigen Ackerbodens (A) entlang einer ansteigenden Förderstrecke (T) in den Bereich eines mit Abstand (H) über einer Ackerfläche (AF) angeordneten Trenngerätes (2) bewegt und in dessen Bereich das Gemisch (G) entlang zumindest einer Separierstrecke (7) verlagert wird, derart, dass mittels einer zumindest phasenweise erfolgenden Umlenkung (U) von Teilen des Gemisches (G) jeweilige unterschiedliche Gemisch-Fraktionen in Form von groben, kleinen und feinen Partikeln (P, P', P") nacheinander oder gleichzeitig aussortiert werden, dabei in Fahrtrichtung (F) nach vorn zumindest die jeweiligen groben Partikel (P) in eine über der Ackersohle (AF) abgelegte Schichtung verlagert werden und oberhalb dieser eine Nutzschicht (N) mit im Wesentlichen nur feinen Partikeln (P") als weitgehend steinfreie Pflanzzone erzeugt wird, **dadurch gekennzeichnet, dass** ausgehend von einem in Bearbeitungsbreite (B) aufgenommenen Gemisch (G) zumindest eine Fraktion der aussortierbaren Partikel (P, P', P") in zumindest einer im Wesentlichen linienförmig und unterhalb der Nutzschicht (N) verlaufenden Sammelzone (6, 6', 6") abgelegt wird, derart, dass an definiert nachvollziehbaren Positionen (PA) des Ackerbodens (A) befindliche Sammelzonen (6, 6', 6") nach Art eines Linienrasters unterhalb der Nutzschicht konzentriert abgelegt werden.

2. Verfahren nach Anspruch 1, **dadurch gekennzeichnet, dass** die zumindest bereichsweise unterhalb der Separierstrecke (7) verlaufende Sammelzone (6, 6', 6") durch eine innerhalb der Bearbeitungsbreite (B) erfolgende Umlenkung (U, U') von Teilen des Gemisches (G) in Fahrtrichtung (F) nach vorn gebildet wird.

3. Verfahren nach Anspruch 1, **dadurch gekennzeichnet, dass** zumindest ein Teilstrom von Teilen des Gemisches (G) durch eine seitlich neben der Bearbeitungsbreite (B') verlaufende Förderstrecke in Fahrtrichtung (F) nach vorn und damit unter die Nutzschicht (N) verlagert wird.

4. Verfahren nach einem der Ansprüche 1 bis 3, **dadurch gekennzeichnet, dass** innerhalb der Bearbeitungsbreite (B) mehrere der Sammelzonen (6, 6', 6") gebildet werden.

5. Verfahren nach einem der Ansprüche 1 bis 4, **dadurch gekennzeichnet, dass** während einer in Fahrtrichtung (F) erfolgenden umgelenkten Förderphase (U') des Gemisches (G) mehrere Sammelzonen (6, 6', 6") mit unterschiedlicher Verteilung der Partikel (P, P', P") gebildet werden.

6. Verfahren nach einem der Ansprüche 1 bis 5, **dadurch gekennzeichnet, dass** im Bereich eines innerhalb der Bearbeitungsbreite (B) definierten Beetes (8) als Nutzschicht (N) sämtliche störenden Steine, Fremdkörper o. dgl. Fraktionen aufgenommen und im Ergebnis der Separierphase (7) als linienförmige Sammelzone(n) (6, 6', 6") in einem später unterhalb der Beet-Nutzzone (N) befindlichen Bereich abgelegt wird/werden.

7. Verfahren nach einem der Ansprüche 1 bis 6, **dadurch gekennzeichnet, dass** die Sammelzonen (6, 6', 6") oder zumindest eine der Sammelzonen (6) nur aus den groben Partikeln (P) gebildet wird.

8. Verfahren nach einem der Ansprüche 1 bis 6, **dadurch gekennzeichnet, dass** während der Ablage der linienförmigen Sammelzone (6, 6', 6") aus im Wesentlichen nur groben Partikeln (P) eine sich über die Bearbeitungsbreite (B) erstreckende Sammellage (9) aus kleinen Partikeln (P') gebildet und diese Sammellage (9) mit der Sammelzone (6, 6', 6") zu einer bereichsweisen Mischstruktur-Lage zusammengefasst wird.

9. Verfahren nach Anspruch 8, **dadurch gekennzeichnet, dass** die Sammelzone (6, 6', 6") und die Sammellage (9) im Wesentlichen gleichzeitig aus den beiden Fraktionen (P, P') gebildet und als Mischstruktur-Lage abgelegt werden.

10. Verfahren nach Anspruch 8 oder 9, **dadurch gekennzeichnet, dass** die kleinen Partikel (P') der Sammellage (9) unterhalb der steinfreien Nutzschicht (N) in Form eines Beetes (8) über dessen vollständige Breite verteilt werden.

11. Verfahren nach einem der Ansprüche 1 bis 10, **dadurch gekennzeichnet, dass** in einem frei wählbaren Bereich unterhalb der steinfreien Nutzschicht (N) die zumindest eine linienförmige Sammelzone (6, 6', 6") mit groben Partikeln (P) gebildet wird.

12. Verfahren nach Anspruch 11, **dadurch gekennzeichnet, dass** die zumindest eine linienförmig verlaufende Sammelzone (6, 6', 6") in einem jeweiligen Randbereich der steinfreien Nutzschicht (N) gebildet wird.

13. Verfahren nach Anspruch 11 oder 12, **dadurch gekennzeichnet, dass** die zumindest eine Sammelzone (6, 6', 6") zwischen zwei als jeweilige Nutzschicht (N, N') benachbarten Beeten (8, 8') gebildet wird.

14. Verfahren nach einem der Ansprüche 1 bis 13, **dadurch gekennzeichnet, dass** mehrere der linienförmig gebildeten Sammelzonen (6, 6', 6") wahlweise unter und/oder neben der Nutzschicht (N) abgelegt werden.

15. Verfahren nach einem der Ansprüche 1 bis 14, **dadurch gekennzeichnet, dass** während der separierenden Behandlung einer Bodenschicht (A) die jeweilige(n) mit der/den Sammelzone(n) (6, 6', 6") zusammenwirkende(n) Nutzschicht(en) (N, N') als eine jeweilige Pflanzenaufnahmezone (10, 11) profiliert wird/werden.

16. Verfahren nach einem der Ansprüche 1 bis 15, **dadurch gekennzeichnet, dass** während der Aufnahme des Gemisches (G) zumindest eine den jeweiligen Ablagebereich für die jeweilige(n) linienförmig verlaufende(n) Sammelzone(n) (6, 6', 6") vorgebende Furche (12, 13, 14) erzeugt wird.

17. Verfahren nach Anspruch 16, **dadurch gekennzeichnet, dass** gleichzeitig mehrere in Querrichtung der Separierbreite eine jeweilige Sammelzone (6, 6', 6") vorgebende Furchen (12, 13, 14) erzeugt werden.

18. Verfahren nach einem der Ansprüche 1 bis 17, **dadurch gekennzeichnet, dass** die jeweiligen Abstände von linienförmig erzeugten Sammelzonen (6, 6', 6") auf zumindest ein Spurmaß (15) einer landwirtschaftlichen Maschine o. dgl. Geräte abgestimmt wird.

19. Einrichtung zum Behandeln von steinigen Ackerböden zur Durchführung des Verfahrens gemäß einem der Ansprüche 1 bis 18, mit einem ein Gemisch (G) steinigen Ackerbodens (A) aufnehmenden Trenngerät (2), das zumindest eine das oberhalb der Ackerfläche (A) mit einem Förderer (3, 4) zugeführte Gemisch (G) übernehmende Separierstrecke (7) aufweist, mittels der zumindest als grobe, kleine und feine Partikel (P, P', P") definierbare Fraktionen des Gemisches (G) trennbar sind, derart, dass nach der Separierphase hinter der Einrichtung (1) eine Bodenstruktur bestehend aus gereinigter Nutzschicht (N) mit feinen Partikeln (P") sowie zumindest einer darunter befindlichen Ablageschicht mit groben und/oder kleinen Partikeln (P, P') gebildet ist, **dadurch gekennzeichnet, dass** die zumindest eine Separierstrecke (7) des Trenngerätes (2) eine eine konzentrierte Sammlung und Ablage von Partikeln bewirkende Abfördereinheit (17) aufweist, derart, dass zumindest eine aus dem Gemisch (G) vorwählbare Partikel-Fraktion (P, P', P") in zumindest einer linienförmig und unterhalb der Nutzschicht (N) verlaufenden Sammelzone (6, 6', 6") ablegbar ist.

20. Einrichtung nach Anspruch 19, **dadurch gekennzeichnet, dass** die zumindest eine linienförmige Sammelzone (6, 6', 6") in Fahrtrichtung (F) nach vorn im Wesentlichen unterhalb der Abfördereinheit (17) und innerhalb der Bearbeitungsbreite (B) ablegbar ist.

21. Einrichtung nach Anspruch 19, **dadurch gekennzeichnet, dass** zumindest ein Teilstrom der die Sammelzone (6) bildenden Teile des Gemisches (G) mittels eines zusätzlichen Förderers (ZF) als die Abfördereinheit (17') neben der von der Einrichtung (1) definierten Bearbeitungsbreite (B) in Fahrtrichtung (F) nach vorn verlagerbar ist.

22. Einrichtung nach einem der Ansprüche 19 bis 21, **dadurch gekennzeichnet, dass** in Fahrtrichtung (F) der Einrichtung (1) die zumindest eine Abfördereinheit (17) am vorderen Ende zumindest eines in Fahrtrichtung (F) wirkenden Teilabschnitts der Separierstrecke (7) angeordnet ist.

23. Einrichtung nach einem der Ansprüche 19 bis 22, **dadurch gekennzeichnet, dass** der mit dem Förderer (4, 5) in die Einrichtung (1) zugeführte steinige Ackerboden (A) im Bereich einer oben liegenden Aufbruchstrecke (19) verlagerbar ist und von dieser jeweilige in Form von Steinriesen (R) ausgebildete Fraktionen in insbesondere ein nachgeordnetes Sammelgerät (20) ausleitbar sind, derart, dass nur die groben, kleinen und feinen Partikel (P, P', P") als Fraktionen in einen nachfolgenden Teil der Separierstrecke (7) überführbar sind.

24. Einrichtung nach einem der Ansprüche 19 bis 23, **dadurch gekennzeichnet, dass** die ein Brechen, Zerkleinern und/oder Sieben des Gemisches (G) bewirkende erste Aufbruchstrecke (19) an ihrem Förderende mit zumindest einer zweiten Aufbereitungsstrecke (24) zusammenwirkt, sich an diese zumindest eine das Gemisch (G') in Fahrtrichtung umgelenkt bewegende Horizontalfördereinheit (25) anschließt und vor dieser die in Fahrtrichtung (F) vorn liegende Abfördereinheit (17) zur Erzeugung der Sammelzone(n) (6, 6', 6") vorgesehen ist.

25. Einrichtung nach Anspruch 23, **dadurch gekennzeichnet, dass** im Bereich der zweiten, im Wesentlichen vertikal nach unten ausrichtbare Separierwerkzeuge (26) aufweisenden Aufbereitungsstrecke (24) eine das fallende Gemisch (G') zur Horizontalfördereinheit (25) ableitende Prallplatte (27) vorgesehen ist.

26. Einrichtung nach einem der Ansprüche 19 bis 25, **dadurch gekennzeichnet, dass** die Horizontalfördereinheit (25) mit Höhenabstand im Wesentlichen parallel unter der ersten Aufbruchstrecke (19) angeordnet ist.

27. Einrichtung nach einem der Ansprüche 19 bis 26, **dadurch gekennzeichnet, dass** die Horizontalfördereinheit (25) in Fahrtrichtung (F) ansteigend geneigt verläuft (Pfeil C).

28. Einrichtung nach Anspruch 27, **dadurch gekennzeichnet, dass** die Horizontalfördereinheit (25) mit zumindest zwei durch eine Fallstufe (28) getrennten Teilbereichen versehen ist.

29. Einrichtung nach einem der Ansprüche 19 bis 28, **dadurch gekennzeichnet, dass** die Abfördereinheit (17) mit zumindest einer Profil-Transportwalze (28) versehen ist, die in Querrichtung zwischen zwei randseitigen zylindrischen Teilbereichen (29, 29', 29") zumindest eine tonnenförmige Leitprofilierung (30, 30') aufweist.

30. Einrichtung nach Anspruch 29, **dadurch gekennzeichnet, dass** das von der Abfördereinheit (17) übernommene Gemisch (G') im Bereich eines oberseitigen Wellenprofils (WP) von der Transportwalze (28) erfassbar und beim Weitertransport aus einer der Fahrtrichtung (F) entsprechenden Verlagerungsrichtung (U') ablenkbar ist.

31. Einrichtung nach Anspruch 29 oder 30, **dadurch gekennzeichnet, dass** die tonnenförmige Leitprofilierung (30, 30') als ein zu den zylindrischen Teilbereichen (29, 29', 29") hin abfallender Wellenberg (WP) wirksam ist, derart, dass von diesem aus jeweils voreinstellbare Größen von Fraktionen des Gemisches (G') zu den das Wellental (WT) bildenden zylindrischen Teilbereichen (29, 29', 29") hin ableitbar sind.

32. Einrichtung nach einem der Ansprüche 29 bis 31, **dadurch gekennzeichnet, dass** die Transportwalze (28) aus mehreren in Achsrichtung mit Spaltabstand (SA) zueinander angeordneten Mitnahmescheiben und/oder -sternen (33) besteht und das zwischen diesen vorgesehene Spaltmaß (SA) entsprechend den zu sortierenden Fraktionen (P, P', P") variabel bemessen ist.

33. Einrichtung nach einem der Ansprüche 29 bis 32, **dadurch gekennzeichnet, dass** die Abfördereinheit (17) aus mehreren Profil-Transportwalzen (28, 28', 28") gebildet ist.

34. Einrichtung nach Anspruch 33, **dadurch gekennzeichnet, dass** die in Förderrichtung (U') der Abfördereinheit (17) benachbarten Transportwalzen (28, 28', 28") in den Zonen mit zylindrischen Teilbereichen (29, 29', 29") und den jeweiligen Bereichen mit der zumindest einen tonnenförmigen Leitprofilierung (30, 30') jeweils variabel vorgebbare Durchmesser (D, D')und Breitenmaße aufweisen.

35. Einrichtung nach Anspruch 33 oder 34, **dadurch gekennzeichnet, dass** die mit mehreren Transportwalzen (28, 28', 28") versehene Abfördereinheit (17) jeweilige in Förderrichtung (U) aufeinanderfolgende Wellenprofile (WP, WT) aufweist, wobei diese in Förderrichtung (U) enger werdende Wellentäler (WT) bilden (Winkel E) und mit diesen jeweilige sich verbreiternde Wellenberg (WP, WP') zusammenwirken.

36. Einrichtung nach Anspruch 35, **dadurch gekennzeichnet, dass** im Bereich der in Förderrichtung enger werdenden Wellentäler (WT) die jeweils groben Partikel (P) zusammenführbar und zu einer der schmalen linearen Sammelzonen (6, 6', 6") hin verlagerbar sind.

37. Einrichtung nach einem der Ansprüche 29 bis 36, **dadurch gekennzeichnet, dass** die Transportwalze(n) (28, 28', 28") mit jeweiligen im Bereich von Wellenberg (WP) und Wellental (WT) mit variabel ausgebildeten Durchmessern (D, D') versehenen Sternrädern (34) versehen ist/sind.

38. Einrichtung nach einem der Ansprüche 29 bis 37, **dadurch gekennzeichnet, dass** zumindest im Bereich der ableitenden tonnenförmigen Leitprofilierungen (30, 30') jeweilige plattenförmige Trennscheiben (35) mit Umfangsprofil (36) vorgesehen sind.

## Claims

1. Method for treating stony arable soil, a mixture (G) of stony arable soil (A) that is received in the working width (B) as a soil layer being moved along a rising conveyor path (T) into the region of a dividing apparatus (2) arranged at a distance (H) above an arable field (AF) and the mixture (G) being displaced along at least one separating path (7) in the region of said dividing apparatus such that, by means of a deflection (U) of parts of the mixture (G) that occurs at least in phases, respective different mixture fractions in the form of coarse, small and fine particles (P, P', P") are sorted out consecutively or simultaneously, in so doing at least the respective coarse particles (P) being displaced in a forward travel direction (F) into a layered arrangement deposited over the arable bed (AF) and, above this layered arrangement, a use layer (N) comprising substantially only fine particles (P") being produced as a largely stone-free planting zone, **characterised in that**, proceeding from a mixture (G) received in the working width (B), at least one fraction of the sortable particles (P, P', P") is deposited in at least one substantially linear collection zone (6, 6', 6") that extends underneath the use layer (N) such that collection zones (6, 6', 6") located at defined reproducible positions (PA) of the arable soil (A) are deposited in a concentrated manner underneath the use layer in the manner of a lattice.

2. Method according to claim 1, **characterised in that** the collection zone (6, 6', 6") that extends at least in regions underneath the separating path (7) is formed by a deflection (U, U') of parts of the mixture (G) in the forward travel direction (F), which deflection occurs within the working width (B).

3. Method according to claim 1, **characterised in that** at least a partial flow of parts of the mixture (G) is displaced in the forward travel direction (F) and therefore under the use layer (N) by a conveyor path that extends laterally alongside the working width (B').

4. Method according to any of claims 1 to 3, **characterised in that** a plurality of the collection zones (6, 6', 6") are formed within the working width (B).

5. Method according to any of claims 1 to 4, **characterised in that**, during a deflected conveying phase (U') of the mixture (G) that occurs in the travel direction (F), a plurality of collection zones (6, 6', 6") having different distribution of the particles (P, P', P") is formed.

6. Method according to any of claims 1 to 5, **characterised in that** all disruptive stones, foreign bodies or similar fractions are received in the region of a bed (8) defined within the working width (B) as a use layer (N) and, as a result of the separating phase (7), is/are deposited as linear collection zone(s) (6, 6', 6") in a region subsequently located underneath the bed use zone (N).

7. Method according to any of claims 1 to 6, **characterised in that** the collection zones (6, 6', 6") or at least one of the collection zones (6) is/are only formed from the coarse particles (P).

8. Method according to any of claims 1 to 6, **characterised in that**, while depositing the linear collection zone (6, 6', 6") made of substantially only coarse particles (P), a collection layer (9) that extends over the working width (B) is formed from small particles (P') and this collection layer (9) is combined with the collection zone (6, 6', 6") to form a mixed structure layer in regions.

9. Method according to claim 8, **characterised in that** the collection zone (6, 6', 6") and the collection layer (9) are formed substantially simultaneously from the two fractions (P, P') and are deposited as a mixed structure layer.

10. Method according to either claim 8 or claim 9, **characterised in that** the small particles (P') of the collection layer (9) are distributed underneath the stone-free use layer (N) in the form of a bed (8) over the entire width thereof.

11. Method according to any of claims 1 to 10, **characterised in that** the at least one linear collection zone (6', 6", 6") comprising coarse particles (P) is formed in a freely selectable region underneath the stone-free use layer (N).

12. Method according to claim 11, **characterised in that** the at least one collection zone (6, 6', 6") that extends linearly is formed in a corresponding edge region of the stone-free use layer (N).

13. Method according to either claim 11 or claim 12, **characterised in that** the at least one collection zone (6, 6', 6") is formed between two beds (8, 8') that are adjacent as a corresponding use layer (N, N').

14. Method according to any of claims 1 to 13, **characterised in that** a plurality of the linear collection zones (6, 6', 6") are optionally deposited below and/or next to the use layer (N).

15. Method according to any of claims 1 to 14, **characterised in that**, during the separating treatment of a soil layer (A), the corresponding use layer(s) (N, N') interacting with the collection zone(s) (6, 6', 6") is/are profiled as a corresponding plant receiving zone (10, 11).

16. Method according to any of claims 1 to 15, **characterised in that**, while receiving the mixture (G), at least one furrow (12, 13, 14) is produced that predetermines the corresponding deposit region for the corresponding collection zone(s) (6, 6', 6") that extend linearly.

17. Method according to claim 16, **characterised in that** a plurality of furrows (12, 13, 14) are simultaneously produced that predetermine a corresponding collection zone (6, 6', 6") in the transverse direction of the separating width.

18. Method according to any of claims 1 to 17, **characterised in that** the respective distances between linearly produced collection zones (6, 6', 6") are matched to at least one track dimension (15) of an agricultural machine or similar apparatuses.

19. Device for treating stony arable soil in order to carry out the method according to any of claims 1 to 18, comprising a dividing apparatus (2) that receives a mixture (G) of stony arable soil (A) and has at least one separating path (7) that takes the mixture (G) which is fed above the arable field (A) by means of a conveyor (3, 4), by means of which apparatus fractions of the mixture (G) can be divided at least as coarse, small and fine particles (P, P', P") such that, after the separating phase, a soil structure consisting of a cleaned use layer (N) comprising fine particles (P") and at least one deposit layer located thereunder comprising coarse and/or small particles (P, P') is formed behind the device (1), **characterised in that** the at least one separating path (7) of the dividing apparatus (2) has a discharge unit (17) that causes concentrated collection and deposit of particles such that at least one particle fraction (P, P', P") that can be preselected from the mixture (G) can be deposited in at least one collection zone (6, 6', 6") that extends linearly and underneath the use layer (N).

20. Device according to claim 19, **characterised in that** the at least one linear collection zone (6, 6', 6") can be deposited in the forward travel direction (F) substantially underneath the discharge unit (17) and within the working width (B).

21. Device according to claim 19, **characterised in that** at least one partial flow of the parts of the mixture (G) that form the collection zone (6) can be displaced in the forward travel direction (F) by means of an additional conveyor (ZF) as the discharge unit (17') alongside the working width (B) defined by the device (1).

22. Device according to any of claims 19 to 21, **characterised in that**, in the travel direction (F) of the device (1), the at least one discharge unit (17) is arranged at the front end of at least one portion of the separating path (7) that acts in the travel direction (F).

23. Device according to any of claims 19 to 22, **characterised in that** the stony arable soil (A) fed into the device (1) by means of the conveyor (4, 5) can be displaced in the region of a departure path (19) located at the top and, from this path, respective fractions in the form of very large stones (R) can be channelled into in particular a collection apparatus (20) arranged downstream such that only the coarse, small and fine particles (P, P', P") can be transferred as fractions into a subsequent part of the separating path (7).

24. Device according to any of claims 19 to 23, **characterised in that** the first departure path (19) that causes the mixture (G) to be broken, crushed and/or sieved cooperates at the conveying end thereof with at least one second processing path (24), connects to this at least one horizontal conveying unit (25) that moves the mixture (G') in a deflected manner in the travel direction, and is provided upstream of this conveying unit (17) that is at the front in the travel direction (F) in order to produce the collection zone(s) (6, 6', 6").

25. Device according to claim 23, **characterised in that**, in the region of the second processing path (24) having separating tools (26) that can be oriented substantially vertically downwards, a baffle plate (27) is provided that diverts the falling mixture (G') to the horizontal conveying unit (25).

26. Device according to any of claims 19 to 25, **characterised in that** the horizontal conveying unit (25) is arranged at a vertical distance substantially in parallel underneath the first departure path (19).

27. Device according to any of claims 19 to 26, **characterised in that** the horizontal conveying unit (25) extends at a rising incline (arrow C) in the travel direction (F).

28. Device according to claim 27, **characterised in that** the horizontal conveying unit (25) is provided with at least two partial regions divided by a fall stage (28).

29. Device according to any of claims 19 to 28, **characterised in that** the discharge unit (17) is provided with at least one profile transport roller (28) which has at least one barrel-shaped guide profiling (30, 30') in the transverse direction between two peripheral cylindrical partial regions (29, 29', 29").

30. Device according to claim 29, **characterised in that** the mixture (G') taken from the discharge unit (17) can be picked up in the region of a wave profile (WP) at the top of the transport roller (28) and can be deflected out of a displacement direction (U') corresponding to the travel direction (F) during further transport.

31. Device according to either claim 29 or claim 30, **characterised in that** the barrel-shaped guide profiling (30, 30') operates as a wave crest (WP) that falls away towards the cylindrical partial regions (29, 29', 29") such that, from this crest, preadjustable sizes of fractions of the mixtures (G') can be diverted towards the cylindrical partial regions (29, 29', 29") that form the wave trough (WT).

32. Device according to any of claims 29 to 31, **characterised in that** the transport roller (28) consists of a plurality of driving plates and/or fins (33) arranged in the axial direction at a gap distance (SA) from one another and the gap size (SA) provided therebetween is variably dimensioned corresponding to the fractions (P, P', P") to be sorted.

33. Device according to any of claims 29 to 32, **characterised in that** the discharge unit (17) is formed from a plurality of profile transport rollers (28, 28', 28").

34. Device according to claim 33, **characterised in that** the transport rollers (28, 28', 28") adjacent in the conveying direction (U') of the discharge unit (17) in the zones comprising cylindrical partial regions (29, 29', 29") and the respective regions comprising the at least one barrel-shaped guide profiling (30, 30') each have variably predeterminable diameters (D, D') and width dimensions.

35. Device according to either claim 33 or claim 34, **characterised in that** the discharge unit (17) provided with a plurality of transport rollers (28, 28', 28") has respective wave profiles (WP, WT) that are in succession in the conveying direction (U), these forming wave troughs (WT) that become narrower in the conveying direction (U) (angle E) and respective widening wave crests (WP, WP') cooperating therewith.

36. Device according to claim 35, **characterised in that**, in the region of the wave troughs (WT) that become narrower in the conveying direction, the coarse particles (P) can be brought together and displaced towards one of the narrow linear collection zones (6, 6', 6").

37. Device according to any of claims 29 to 36, **characterised in that** the transport roller(s) (28, 28', 28") is/are provided with respective star wheels (34) that are provided with variable diameters (D, D') in the region of the wave crest (WP) and wave trough (WT).

38. Device according to any of claims 29 to 37, **characterised in that** respective planar cutting discs (35) having a peripheral profile (36) are provided at least in the region of the diverting barrel-shaped guide profilings (30, 30').

## Revendications

1. Procédé de traitement de terres agricoles pierreuse, un mélange de terre agricole pierreuse (A), qui est reçu dans la largeur de traitement (B) sous forme de couche de sol (G), étant déplacé le long d'une section de convoyeur montante (T) jusque dans la zone d'un appareil de séparation (2), disposé à une distance (H) sur une surface agricole (AF) et le mélange (G) étant déplacé le long d'au moins une section de séparation (7) dans la zone dudit appareil de séparation, de telle sorte que des fractions de mélange différentes respectives se présentant sous la forme de particules grossières, petites et fines (P, P', P") soient triées successivement ou en même temps par déviation (U), se faisant au moins par phases, de parties du mélange (G), tandis qu'au moins les particules grossières respectives (P) sont déplacées vers l'avant dans le sens de déplacement (F) jusque dans une couche déposée sur le sol agricole (AF) et, au-dessus de celle-ci, une couche utile (N) ne comportant sensiblement que des particules fines (P") est produite sous la forme d'une zone de plantation en grande partie exempte de pierres, **caractérisé en ce que**, à partir d'un mélange (G) reçu dans la largeur de traitement (B), au moins une fraction des particules (P, P', P") pouvant être triées est déposée dans au moins une zone de collecte (6, 6', 6") s'étendant de manière sensiblement linéaire et au-dessous de la couche utile (N) de telle sorte que des zones de collecte (6, 6', 6') situées à des positions traçables définies (PA) du sol agricole (A) soient déposées de manière concentrée sous la couche utile à la manière d'une trame de lignes.

2. Procédé selon la revendication 1, **caractérisé en ce que** la zone de collecte (6, 6', 6"), s'étendant au moins en partie au-dessous de la section de séparation (7) est formée vers avant dans le sens de déplacement (F) par la déviation (U, U'), se faisant dans la largeur de traitement (B), de parties du mélange (G).

3. Procédé selon la revendication 1, **caractérisé en ce qu'**au moins un écoulement partiel de parties du mélange (G) est déplacé vers l'avant dans le sens de déplacement (F) et donc au-dessous de la couche utile (N) par une section de transport s'étendant latéralement à la largeur de traitement (B').

4. Procédé selon l'une des revendications 1 à 3, **caractérisé en ce que** plusieurs des zones de collecte (6, 6', 6") sont formées dans la largeur de traitement (B).

5. Procédé selon l'une des revendications 1 à 4, **caractérisé en ce que** lors d'une phase de transport déviée (U') du mélange (G), se faisant dans le sens de déplacement (F), plusieurs zones de collecte (6, 6', 6") sont formées avec différentes distributions des particules (P, P', P").

6. Procédé selon l'une des revendications 1 à 5, **caractérisé en ce que** toutes les pierres, tous les corps étrangers ou toutes les, fractions analogues qui sont gênant sont reçues comme couche utile (N) dans la zone d'un parterre (8) défini dans la largeur de traitement (B) et sont déposés, à la suite de la phase de séparation (7), sous la forme d'au moins zone de collecte linéaire (6, 6', 6") dans une zone située ultérieurement sous la zone de parterre utile (N).

7. Procédé selon l'une des revendications 1 à 6, **caractérisé en ce que** les zones de collecte (6, 6', 6") ou au moins une des zones de collecte (6) ne sont formées qu'à partir des particules grossières (P).

8. Procédé selon l'une des revendications 1 à 6, **caractérisé en ce qu'**une couche de collecte (9) constituée de petites particules (P1) et s'étendant sur la largeur de traitement (B) est formée pendant le dépôt de la zone de collecte linéaire (6, 6', 6") constituées sensiblement uniquement de particules grossières (P) et cette couche de collecte (9) est combinée à la zone de collecte (6, 6', 6") pour former une couche à structure mixte partielle.

9. Procédé selon la revendication 8, **caractérisé en ce que** la zone de collecte (6, 6', 6") et la couche de collecte (9) sont formées sensiblement en même temps à partir des deux fractions (P, P') et sont déposées sous la forme d'une couche à structure mixte.

10. Procédé selon la revendication 8 ou 9, **caractérisé en ce que** les petites particules (P1) de la couche de collecte (9) sont distribuées sous la couche utiles sans pierres (N) sous la forme d'un parterre (8) sur toute largeur de celui-ci.

11. Procédé selon l'une des revendications 1 à 10, **caractérisé en ce que**, dans une zone librement choisie au-dessous de la couche utile sans pierres (N), l'au moins une zone de collecte linéaire (6, 6', 6") est formée avec des particules grossières (P).

12. Procédé selon la revendication 11, **caractérisé en ce que** l'au moins une zone de collecte linéaire (6, 6', 6") est formée dans une zone de bord respective de la couche utile sans pierres (N).

13. Procédé selon la revendication 11 ou 12, **caractérisé en ce que** l'au moins une zone de collecte (6, 6', 6") est comprise entre deux parterres adjacents (8, 8') se présentant sous la forme d'une couche utile respective (N, N').

14. Procédé selon l'une des revendications 1 à 13, **caractérisé en ce que** plusieurs des zones de collecte linéaires (6, 6', 6") sont déposées au choix au-dessous et/ou à côté de la couche utile (N).

15. Procédé selon l'une des revendications 1 à 14, **caractérisé en ce que**, pendant le traitement de séparation d'une couche de sol (A), l'au moins une couche utile (N, N'), qui coopère avec l'au moins une zone de collecte respective (6, 6', 6"), est profilée comme une zone de réception de plantation respective (10, 11).

16. Procédé selon l'une des revendications 1 à 15, **caractérisé en ce qu'**au moins un sillon (12, 13, 14), prédéfinissant la zones de dépôt respective destinée à l'au moins une zone de collecte linéaire respective (6, 6', 6") est généré pendant la réception du mélange (G).

17. Procédé selon la revendication 16, **caractérisé en ce que** plusieurs sillons (12, 13, 14), prédéfinissant une zone de collecte respective (6, 6', 6") dans la direction transversale à la largeur de séparation, sont générés simultanément.

18. Procédé selon l'une des revendications 1 à 17, **caractérisé en ce que** les distances respectives entre les zones de collecte linéaires générées (6, 6', 6") sont réglées sur au moins un écartement (15) d'une machine agricole ou d'appareils similaires.

19. Dispositif de traitement de terres agricoles pierreuses, destiné à mettre en oeuvre le procédé selon l'une des revendications 1 à 18, comprenant
un appareil de séparation (2) recevant un mélange (G) de sol agricole pierreux (A) et comportant au moins une section de séparation (7) qui prend en charge le mélange (G) amené par un convoyeur (3, 4) au-dessus de la surface agricole (A) et qui sépare au moins des fractions du mélange (G) définissables comme particules grossière, petites et fines (P, P', P") de telle sorte que, après la phase de séparation, une structure de sol comprenant une couche utile nettoyée (N) comportant des particules fines (P") et au moins une couche de dépôt sous-jacente comportant des particules grossières et/ou petites (P, P') est formée derrière le dispositif (1), **caractérisé en ce que** l'au moins une section de séparation (7) de l'appareil de séparation (2) comporte une unité d'enlèvement (17) provoquant une collecte et un dépôt concentrés de particules de telle sorte qu'au moins une fraction de particules (P, P', P") préalablement choisie du mélange (G) peut être déposée dans au moins une zone de collecte (6, 6', 6") s'étendant linéairement et au-dessous de la couche utile (N).

20. Dispositif selon la revendication 19, **caractérisé en ce que** l'au moins une zone de collecte linéaire (6, 6', 6") peut être déposée vers l'avant dans le sens de déplacement (F) sensiblement au-dessous de l'unité d'enlèvement (17) et dans la largeur de traitement (B).

21. Dispositif selon la revendication 19, **caractérisé en ce qu'**au moins un écoulement partiel des parties du mélange (G) qui forment la zone de collecte (6) peut être déplacé vers l'avant dans le sens de déplacement (F) au moyen d'un convoyeur supplémentaire (ZF) en tant qu'unité d'enlèvement (17') à côté de la largeur de traitement (B) défini par le dispositif (1).

22. Dispositif selon l'une des revendications 19 à 21, caractérisé que, dans le sens de déplacement (F) du dispositif (1), l'au moins une unité d'enlèvement (17) est disposée à l'extrémité avant d'au moins une partie de la section de séparation (7) agissant dans le sens de déplacement (F).

23. Dispositif selon l'une des revendications 19 à 22, **caractérisé en ce que** le sol agricole pierreux (A), amené par le convoyeur (4, 5) jusque dans le dispositif (1), peut être déplacé dans la zone d'une section de fractionnement (19) située en haut et des fractions respectives, formées de très grosses pierres, peuvent être déviées de ladite section de fractionnement jusque un appareil de collecte (20) disposé en aval de telle sorte que seules les particules grossières, petites et fines (P, P', P") peuvent être transférées comme fractions dans une partie de la section de séparation (7) disposée en aval.

24. Dispositif selon l'une des revendications 19 à 23, caractérisé que la première section de fractionnement (19), provoquant le fractionnement, le broyage et/ou le tamisage du mélange (G), coopère à son extrémité de convoyeur avec au moins une deuxième section de traitement (24) à laquelle se raccorde au moins une unité de convoyeur horizontal qui déplace le mélange (G1) en le déviant dans le sens de déplacement (25) et en amont de laquelle l'unité d'enlèvement (17), placé en avant dans le sens de déplacement (F), est prévue pour générer l'au moins une zone de collecte (6, 6', 6").

25. Dispositif selon la revendication 23, **caractérisé en ce qu'**une plaque de déflection (27), déviant le mélange (G') qui tombe vers l'unité de convoyeur horizontale (25), est prévue dans la zone de la deuxième section de préparation (24) comportant des outils de séparation (26) qui peuvent être orientés sensiblement verticalement vers le bas,.

26. Dispositif selon l'une des revendications 19 à 25, **caractérisé en ce que** l'unité de convoyeur horizontale (25) est disposée sensiblement en parallèle, avec un écartement en hauteur, sous la première section de fractionnement (19).

27. Dispositif selon l'une des revendications 19 à 26, **caractérisé en ce que** l'unité de convoyeur horizontale (25) est inclinée de façon montant dans le sens de déplacement (F) (Flèche C).

28. Dispositif selon la revendication 27, **caractérisé en ce que** l'unité de convoyeur horizontal (25) est pourvue d'au moins deux zones partielles séparées par une étape de chute (28).

29. Dispositif selon l'une des revendications 19 à 28, **caractérisé en ce que** l'unité d'enlèvement (17) est pourvue d'au moins un rouleau de transport de profilé (28) qui comporte au moins un profilé de guidage (30, 30') en forme de tonneau dans la direction transversale entre deux sections cylindriques (29, 29', 29") côté bord.

30. Dispositif selon la revendication 29, **caractérisé en ce que** le mélange (G'), pris en charge par l'unité d'enlèvement (17), peut être détecté dans la zone d'un profilé ondulé supérieure (WP) du rouleau de transport (28) et peut être dévié d'un sens de déplacement (U'), correspondant au sens de déplacement (F), lors de la poursuite du transport.

31. Dispositif selon la revendication 29 ou 30, **caractérisé en ce que** le profilé de guidage (30, 30') en forme de tonneau fonctionne comme une crête tombant en direction des zones partielles cylindriques (29, 29', 29'') de telle sorte que chaque taille préréglable de fractions du mélange (G') peut être déviée de ladite crête en direction des zones partielles cylindriques (29, 29', 29'') formant le creux (WT).

32. Dispositif selon l'une des revendications 29 à 31, **caractérisé en ce que** le rouleau de transport (28) comprend plusieurs disques et/ou étoiles d'entraînement (33) disposés à une distance (SA) les uns des autres dans la direction axiale et l'écartement (SA) prévu entre ceux-ci est dimensionné de manière variable en fonction des fractions (P, P', P'').

33. Dispositif selon l'une des revendications 29 à 32, caractérisé l'unité d'enlèvement (17) est formée de plusieurs rouleaux de transport profilés (28, 28', 28'').

34. Dispositif selon la revendication 33, **caractérisé en ce que**, dans les zones pourvues de parties cylindriques (29, 29', 29'') et les régions respectives pourvues d'au moins un profilé de guidage (30, 30') en forme de tonneau, les rouleaux de transport (28, 28', 28'') adjacents dans la direction de transport (U') de l'unité d'enlèvement (17) ont des diamètres (D, D') et des dimensions en largeur prédéterminables.

35. Dispositif selon la revendication 33 ou 34, **caractérisé en ce que** l'unité d'enlèvement (17), pourvue d'une pluralité de rouleaux de transport (28, 28', 28''), comporte des profils ondulés (WP, WT) respectifs successifs dans le sens de transport (U), ces profilés ondulés formant des creux (WT) devenant plus étroits dans le sens de transport (U) (angle E) et coopérant avec ces crêtes (WP, WP') respectives qui s'élargissent.

36. Dispositif selon la revendication 35, **caractérisé en ce que** les particules grossières (P) peuvent être concentrées dans la région des creux (WT) devenant plus étroit dans le sens de transport et peuvent être déplacées en direction de l'une des zones de collecte linéaires étroites (6, 6', 6'').

37. Dispositif selon l'une des revendications 29 à 36, **caractérisé en ce que** l'au moins un rouleau de transport (28, 28', 28'') sont pourvue de roues en étoile respectives ayant au niveau de creux (WP) et de crêtes (WT) des diamètres (D, D') conçus pour être variables.

38. Dispositif selon l'une des revendications 29 à 37, caractérisé que des disques de séparation (35) respectifs en forme de plaque pourvus d'un profil circonférentiel (36) sont prévus au moins dans la région des profilés de guidage déflecteurs (30, 30') en forme de tonneau.
